# EUROPEAN PATENT APPLICATION

(11) **EP 3 581 627 A1**
(43) Date of publication of application: **18.12.2019**
(21) Application number: 18752074.7
(22) Date of filing: 13.02.2018
(51) Int. Cl.: C09D 11/322, B41J 2/01, B41M 5/00

(54) **INK COMPOSITION, INK SET, IMAGE RECORDING METHOD, AND RECORDED MATTER**

(30) Priority: 13.02.2017 JP 2017024426
(71) Applicant: FUJIFILM Corporation, Tokyo 106-8620 (JP)
(72) Inventor: HARADA, Motoi, Ashigarakami-gun Kanagawa 258-8577 (JP); KIYOTO, Naoharu, Ashigarakami-gun Kanagawa 258-8577 (JP); MAKUTA, Toshiyuki, Ashigarakami-gun Kanagawa 258-8577 (JP)
(74) Representative: Klunker IP Patentanwälte PartG mbB
(86) International application number: PCT/JP2018/004944
(87) International publication number: WO 2018/147469

(57) **Abstract**

According to embodiments of the present invention, provided are an ink composition which is used for recording an image using an ink jet method, including tabular metal particles having an average aspect ratio of 3 to 100, a first resin having an anionic moiety, a second resin having at least one cationic moiety selected from an amino group, an amido group, an imino group, a phosphonium group, a salt of the amino group, a salt of the amido group, a salt of the imino group, or a salt of the phosphonium group, and water, in which a content of the first resin is in a range of 0.001% by mass to 60% by mass with respect to a total mass of the tabular metal particles; and the applications thereof.

## Description

### BACKGROUND OF THE INVENTION

### 1. Field of the Invention

The present disclosure relates to an ink composition, an ink set, an image recording method, and a recorded material.

### 2. Description of the Related Art

In the related art, ink compositions containing metal particles have been known. The ink compositions containing metal particles have been used for various image recording methods and expected to be widely used for applications such as formation of images required to have glossiness or decoration of images.

From the viewpoint that an image can easily be recorded on any material, as an image recording method, a recording method using an ink jet method has been widely used for various applications. For example, a metal fine particle-containing composition that contains metal fine particles having a particle size causing melting point depression and acts on a sulfur-containing heterocyclic compound to improve heat resistance is disclosed (for example, see JP2008-001844A). Further, a composition that contains metal fine particles, a polyvalent carboxylic acid compound, and an organic solvent as a paint for forming a circuit is disclosed (for example, see JP2006-173408A). In addition, a disclosure related to a technique of using specific inorganic salts for preventing a decrease in viscosity of an ink composition that contains a pigment coated with a polymer has been made (for example, see JP2015-180710A).

### SUMMARY OF THE INVENTION

In a case where an image to which glossiness has been imparted is recorded according to an ink jet method using an ink composition containing tabular metal particles, the dispersed state or the aligned state of the tabular metal particles contained in the image or the physical properties such as the viscosity of the ink composition affect the specular glossiness of the image and the jettability of the ink in some cases. In order to record an image with glossiness, the ink composition needs to be stably jetted from a jet head and the tabular metal particles in the image need to be in an appropriate aligned state so that a desired image is formed. Since the jettability of the ink tends to be changed depending on the composition or the physical properties of the ink or the jetting conditions, for example, adjustment of the viscosity of the ink composition to be in a range suitable for jetting is carried out for the purpose of adjusting the jettability in some cases.

As a method of adjusting the viscosity of an ink composition, a method of adding a solid additive referred to as a so-called viscosity improver in order to increase the liquid viscosity of an ink composition is exemplified. However, in a case where the viscosity of the ink composition is intended to be increased using a solid additive, proper alignment of tabular metal particles contained in an image formed by jetting an ink to a base material is disturbed after addition of the solid additive in some cases. Disturbance of proper alignment of tabular metal particles results in irregular arrangement of the particles, and this may cause a problem of degradation of specular gloss of an image.

In other words, the jettability at the time of recording an image using, for example, an ink composition that contains tabular metal particles and the specular gloss of the recorded image are in a conflicting relationship which makes it difficult to achieve both of the jettability and the specular glossiness.

In order to improve the jettability of an ink composition without impairing the specular glossiness, it is desired that the alignment of tabular metal particles is not disturbed by a component to be added for the purpose of adjusting the viscosity. From this viewpoint, it is desirable that the effect of adjusting the viscosity of the ink composition is obtained while the amount of the component to be added for the purpose of adjusting the viscosity is suppressed to be low.

Further, small-sized liquid droplets (so-called satellites) separated from main ink droplets are generated depending on ink properties at the time of jetting an ink from an ink jet head. The liquid droplets referred to as satellites may cause deterioration of the image quality because the liquid droplets land in a place different from the place where the main droplets are positioned. In order to suppress generation of satellites, it is important that the ink has liquid properties, which have been adjusted to be suitable for an ink jet head, for example, the viscosity. However, as described above, particularly, since it is desirable that the number of kinds of components to be contained in the ink containing tabular metal particles is small, it is advantageous that the viscosity is adjusted to a desired degree with a small amount thereof.

The present disclosure has been made in consideration of the above-described circumstances.

In other words, an object of an embodiment of the present invention is to provide an ink composition in which jettability of an ink to be jetted according to an ink jet method is excellent and an image to be recorded has excellent specular glossiness, and an ink set.

An object of another embodiment of the present invention is to provide an image recording method in which jettability of an ink to be jetted according to an ink jet method is excellent and an image with excellent specular glossiness is recorded.

An object of still another embodiment of the present invention is to provide a recorded material with excellent specular glossiness.

Specific means for achieving the above-described objects include the following aspects.
<1> An ink composition which is used for recording an image using an ink jet method, the ink composition comprises: tabular metal particles having an average aspect ratio of 3 to 100; a first resin having an anionic moiety; a second resin having at least one cationic moiety selected from the group consisting of an amino group, an amido group, an imino group, a phosphonium group, a salt of an amino group, a salt of an amido group, a salt of an imino group, or a salt of a phosphonium group; and water, in which a content of the first resin is in a range of 0.001% by mass to 60% by mass with respect to a total mass of the tabular metal particles.
<2> In the ink composition according to <1>, the tabular metal particles have an average aspect ratio of 5 or greater.
<3> In the ink composition according to <1> or <2>, the tabular metal particles have an average aspect ratio of 12 or greater.
<4> In the ink composition according to any one of <1> to <3>, the tabular metal particles are particles of at least one metal selected from the group consisting of gold, silver, and platinum.
<5> In the ink composition according to any one of <1> to <4>, the tabular metal particles are silver particles.
<6> In the ink composition according to any one of <1> to <5>, the first resin contains an acid group or a salt of an acid group as the anionic moiety and has a structural unit derived from a compound having a pka of 5 or less.
<7> In the ink composition according to any one of <1> to <6>, the first resin contains an acid group or a salt of an acid group as the anionic moiety and has a structural unit derived from a compound having a pka of 0 or less.
<8> In the ink composition according to any one of <1> to <7>, the first resin contains at least one of a sulfonic acid group or a salt of a sulfonic acid group.
<9> In the ink composition according to any one of <1> to <8>, the first resin contains sodium polystyrene sulfonate.
<10> In the ink composition according to any one of <1> to <9>, the first resin has a weight-average molecular weight of 100000 to 500000.
<11> In the ink composition according to any one of <1> to <10>, the content of the first resin is in a range of 1% by mass to 40% by mass with respect to the total mass of the tabular metal particles.
<12> In the ink composition according to any one of <1> to <11>, the content of the first resin is in a range of 5% by mass to 30% by mass with respect to the total mass of the tabular metal particles.
<13> In the ink composition according to any one of <1> to <12>, the second resin contains gelatin.
<14> In the ink composition according to any one of <1> to <13>, a ratio of the content of the first resin to the content of the second resin is in a range of 0.5 to 4.
<15> The ink composition according to any one of <1> to <14> is used for recording a decorative image using the ink jet method.
<16> An ink set comprises: a first ink, which is the ink composition according to any one of <1> to <15>; and a second ink, which is different from the first ink and contains a colorant.
<17> An image recording method comprises an ink applying step of applying the ink composition according to any one of <1> to <15> to a base material using an ink jet method.
<18> An image recording method which is performed using the ink set according to <16>, the image recording method comprises: a first ink applying step of applying the first ink to a base material using an ink jet method; and a second ink applying step of applying the second ink to the base material using the ink jet method.
<19> A recorded material comprises: a base material; and an image which is disposed on the base material and contains tabular metal particles having an average aspect ratio of 3 to 100, a first resin having an anionic moiety, and a second resin having at least one cationic moiety selected from the group consisting of an amino group, an amido group, an imino group, a phosphonium group, a salt of an amino group, a salt of an amido group, a salt of an imino group, or a salt of a phosphonium group.
<20> The recorded material according to <19> further comprises a colored image containing a colorant, which is provided at at least one of between the base material and the image, or on the image.

According to an embodiment of the present invention, it is possible to provide an ink composition in which the jettability of an ink to be jetted according to an ink jet method is excellent and an image to be recorded has excellent specular glossiness, and an ink set.

According to another embodiment of the present invention, it is possible to provide an image recording method in which the jettability of an ink is excellent and an image with excellent specular glossiness is recorded.

According to still another embodiment of the present invention, it is possible to provide a recorded material with excellent specular glossiness.

### DESCRIPTION OF THE PREFERRED EMBODIMENTS

Hereinafter, an ink composition, an ink set, an image recording method, and a recorded material according to embodiments of the present disclosure will be described in detail.

In the present specification, the numerical ranges shown using "to" indicate ranges including the numerical values described before and after "to" as the minimum values and the maximum values. In the numerical ranges described in a stepwise manner in the present disclosure, the upper limits or the lower limits described in certain numerical ranges may be replaced with the upper limits or the lower limits in other numerical ranges described in a stepwise manner. Further, in the numerical ranges described in the present disclosure, the upper limits or the lower limits described in certain numerical ranges may be replaced with values described in examples.

In the present specification, the amount of each component in a composition indicates the total amount of a plurality of kinds of materials present in the composition in a case where a plurality of kinds of materials corresponding to each of the materials are present in the composition, unless otherwise specified.

In the present specification, the "steps" include not only independent steps but also steps whose intended purposes are achieved even in a case where the steps cannot be precisely distinguished from other steps.

In the present specification, the expression of "the jettability of an ink composition to be jetted according to an ink jet method is excellent" indicates that generation of small-sized liquid droplets (so-called satellites) separated from jetted main ink droplets at the time of jetting the ink composition from a nozzle of an ink jet head is suppressed and thus a phenomenon in which liquid droplets referred to as satellites land in a place different from the place where the main droplets are positioned is suppressed.

Further, in the present specification, the jettability of the ink composition from a nozzle of an ink jet head is also simply referred to as "jettability".

### <Ink composition>

An ink composition according to the embodiment of the present disclosure is an ink composition (hereinafter, also simply referred to as an ink) which is used for recording an image using an ink jet method and includes tabular metal particles having an average aspect ratio of 3 to 100; a first resin (hereinafter, also referred to as an "anionic polymer") having an anionic moiety; a second resin (hereinafter, also referred to as a "binder polymer") having at least one cationic moiety selected from an amino group, an amido group, an imino group, a phosphonium group, a salt of the amino group, a salt of the amide group, a salt of the imino group, or a salt of the phosphonium group; and water, in which the content of the first resin is set to be in a range of 0.001% by mass to 60% by mass with respect to the total mass of the tabular metal particles.

The reason why the effects are exhibited by the ink composition according to the embodiment of the present disclosure are exhibited is assumed as follows.

The composition of the ink is selected so as to be suitable for the properties (for example, the glossiness, the resolution, the adhesiveness, and the weather fastness) required for an image or a material to be recorded, and the jettability at the time of jetting the ink from an ink jet head (hereinafter, also referred to as a jet head) may be changed due to the composition or the properties of the ink associated with the composition. For example, in a case of a composition containing metal particles, since the metal particles may be greatly different from an organic pigment or the like which has been typically used as a colorant in terms of the specific gravity, the shape, or the like, the jettability tends to be affected.

The jettability of the ink jetted from a jet head easily affects the viscosity of the ink to be jetted. For example, small-sized liquid droplets (so-called satellites) separated from main ink droplets may be generated at the time of jetting the ink from an ink jet head depending on the ink properties. Since the liquid droplets referred to as satellites land in a place different from the place where the main droplets are positioned, the image quality tends to be deteriorated. In order to suppress generation of satellites, it is important that the ink has liquid properties, which have been adjusted to be suitable for the ink jet head, for example, the viscosity.

As a method of adjusting the viscosity of the ink composition, a method of adding a solid additive referred to as a so-called viscosity improver in order to adjust the liquid viscosity of the ink composition is exemplified. However, in a case where a solid viscosity improver which has been known in the related art is used, tabular metal particles contained in the ink composition are unlikely to be aligned, and thus the arrangement of the tabular metal particles in a film after being jetted onto a material to be recorded becomes irregular. Therefore, desired specular glossiness is unlikely to be obtained. In other words, it is important to arrange the tabular metal particles with high density and excellent aligning properties in order to impart the specular glossiness. Accordingly, the ink jettability at the time of recording and the specular glossiness of an image containing the tabular metal particles are in a technically conflicting relationship. Meanwhile, since it is desirable that the number of kinds of components to be contained in the ink is small due to various reasons such as the ink stability.

As described above, a technique of maintaining excellent jettability in the ink containing tabular metal particles and improving the specular glossiness has not been established.

The ink composition according to the embodiment of the present disclosure has been made in consideration of the above-described circumstances, and the ink composition prepared to be aqueous uses tabular metal particles and contains two kinds of polymer components which are a first resin (anionic polymer) having an anionic moiety and a second resin (binder polymer) having a cationic moiety.

In a case where the ink composition contains a binder polymer, the dispersibility is imparted to the tabular metal particle and is preferably maintained. Through a partial interaction between the anionic polymer and the binder polymer, a high viscosity improving effect can be expected with a small amount of the anionic polymer. In this manner, the jettability of the ink containing tabular metal particles from the ink jet head can be improved simultaneously with improvement of the specular glossiness derived from the tabular metal particles.

The ink composition according to the embodiment of the present disclosure contains tabular metal particles, and thus an image to be recorded has excellent specular glossiness.

In the present specification, the specular glossiness of the image is evaluated based on the 20° gloss value and the sensory evaluation (image evaluation performed by visual observation). As the 20° gloss value is increased, this means that the specular glossiness of the image is excellent.

Hereinafter, each component contained in the ink composition according to the embodiment of the present disclosure will be described.

### (Tabular metal particles)

The ink composition according to the embodiment of the present disclosure contains at least one kind of tabular metal particles having an average aspect ratio of 3 to 100. In a case where the ink composition contains metal particles having a tabular shape with an aspect ratio which is relatively larger than that of metal particles in a spherical shape or elliptical shape, light absorption in a visible light range is suppressed and glossiness of the image is imparted.

In the ink composition according to the embodiment of the present disclosure, the tabular metal particles are dispersed in the binder polymer and stably maintained, and the jettability is excellent due to the viscosity improving effect obtained by the action of the anionic moiety of the anionic polymer and the cationic moiety of the binder polymer. In addition, alignment inhibition of the tabular metal particles by the anionic polymer is considered to be small, and degradation of the glossiness is suppressed compared to a solid viscosity improver which has been used in the related art.

The tabular metal particles indicate metal particles having a tabular shape.

Here, the term "tabular" indicates that each particle has two main planes.

The metal in the tabular metal particles can be selected from metals which can exhibit specular gloss and may be an alloy. Among examples of the tabular metal particles, from the viewpoints of the specular glossiness, gold (Au) particles, silver (Ag) particles, or platinum (Pt) particles are preferable and silver particles are more preferable.

### (Shape of tabular metal particles)

The shape of the tabular metal particles is not particularly limited as long as each particle is tabular, in other words, each particle has two main planes, and the shape thereof can be appropriately selected depending on the purpose thereof.

Examples of the shape of the tabular metal particles include a triangular shape, a square shape, a hexagonal shape, an octagonal shape, and a circular shape. As the shape of the tabular metal particles, from the viewpoint of a low absorbance in a visible light range, a triangular or higher polygonal shape and a circular shape (hereinafter, also referred to as "triangular to circular shapes") are preferable.

The circular shape is not particularly limited as long as the tabular metal particle has a round shape without corners in a case where the particle is observed from above the main plane (in the normal direction) using a transmission electron microscope (TEM), and can be appropriately selected depending on the purpose thereof.

The triangular or higher polygonal shape is not particularly limited as long as the tabular metal particle has a triangular or higher polygonal shape in a case where the particle is observed in the normal direction of the main plane using a transmission electron microscope (TEM), and can be appropriately selected depending on the purpose thereof.

The angle of the triangular or higher polygonal shape may be an acute angle or an obtuse angle, but an obtuse angle is preferable from the viewpoint that absorption of light in a visible light range can be reduced.

The proportion of the tabular metal particles having triangular to circular shapes in the tabular metal particles is preferably 60% by number or greater, more preferably 65% by number or greater, and particularly preferably 70% by number or greater with respect to the total number of tabular metal particles. In a case where the proportion of the tabular metal particles having triangular to circular shapes is 60% by number or greater, the absorbance of light in a visible light range is further decreased.

Here, the term "% by number" indicates the proportion (percentage) of the number of tabular metal particles having triangular to circular shapes in 500 pieces of tabular metal particles. The "% by number" is acquired by observing 500 pieces of tabular metal particles in the normal direction of the main planes using a TEM.

### (Average equivalent circle diameter and coefficient of variation)

The average equivalent circle diameter of the tabular metal particles is preferably in a range of 10 nm to 300 nm.

In a case where the average equivalent circle diameter of the tabular metal particles is 300 nm or less, the jettability of the ink is further improved. Further, in a case where the average equivalent circle diameter of the tabular metal particles is 300 nm or less, the temporal stability of the ink is also excellent. In addition, in a case where the average equivalent circle diameter of the tabular metal particles is 10 nm or greater, the tabular metal particles are easily produced.

The average equivalent circle diameter of the tabular metal particles is preferably in a range of 50 nm to 300 nm and more preferably in a range of 100 nm to 250 nm.

The "average equivalent circle diameter of the tabular metal particles" indicates the number average value of the equivalent circle diameters of 500 pieces of tabular metal particles.

The equivalent circle diameter of each tabular metal particle is acquired based on a transmission electron microscope image (TEM image). Specifically, the diameter of a circle having the same area as the area (that is, the projected area) of the tabular metal particle in a TEM image is set as the equivalent circle diameter. The example of the method of measuring the average equivalent circle diameter of the tabular metal particles is as described in the examples below.

The coefficient of variation in the particle size distribution of the tabular metal particles is preferably 35% or less, more preferably 30% or less, and particularly preferably 20% or less.

Here, the "coefficient of variation in the particle size distribution of the tabular metal particles" indicate a value (%) obtained by dividing the standard deviation of the equivalent circle diameters (particle size distribution) of 500 pieces of tabular metal particles by the number average value (average equivalent circle diameter) of the equivalent circle diameters of 500 pieces of tabular metal particles and multiplying the divided value by 100.

### (Average thickness)

From the viewpoints of the dispersibility of the tabular metal particles in the ink and the jettability of the ink, the average thickness of the tabular metal particles is preferably 30 nm or less, more preferably in a range of 1 nm to 20 nm, particularly preferably in a range of 3 nm to 16 nm, and more particularly preferably in a range of 3 nm to 12 nm.

In the present specification, the "average thickness of the tabular metal particles" indicates the number average value of the thicknesses of 500 pieces of the tabular metal particles.

The thickness of each tabular metal particle is measured according to a focused ion beam - transmission electron microscopy (FIB-TEM) method. The example of the method of measuring the average thickness of the tabular metal particles is as described in the examples below.

### (Average aspect ratio)

The average aspect ratio which is the average equivalent circle diameter to the average thickness of the tabular metal particles is in a range of 3 to 100 and preferably 5 or greater. In a case where the average aspect ratio of the tabular metal particles is 3 or greater, since the absorption peak due to tabular particles is shifted to a long wavelength side and the reflectivity in a visible light range is increased, the specular glossiness of an image becomes excellent.

From the viewpoint that an increase in reflectivity in a visible light range leads to improvement of the specular glossiness and excellent production suitability, for example, easy removal of impurities, the average aspect ratio of the tabular metal particles is preferably 12 or greater, more preferably 15 or greater, still more preferably 20 or greater, and more preferably 25 or greater. In a case where the average aspect ratio thereof is 12 or greater, the specular glossiness is further improved and impurities are easily removed so that the production time is shortened. Therefore, the production suitability becomes excellent.

The upper limit of the average aspect ratio of the tabular metal particles is not particularly limited, but can be selected to be 100 or less. From the viewpoint of the dispersion stability of the tabular metal particles, the upper limit thereof is 100 or less, preferably 50 or less, more preferably 40 or less, and particularly preferably 30 or less.

Here, the "average aspect ratio of the tabular metal particles" in the present disclosure indicates the ratio [average equivalent circle diameter/average thickness] of the average equivalent circle diameter to the average thickness of the tabular metal particles.

### - Method of synthesizing tabular metal particles -

A method of synthesizing the tabular metal particles is not particularly limited and can be appropriately selected depending on the purpose thereof.

Examples of the method of synthesizing the tabular metal particles having a triangular or higher polygonal shape include liquid phase methods such as a chemical reduction method, a photochemical reduction method, and an electrochemical reduction method.

Among these, as the method of synthesizing the tabular metal particles having a triangular or higher polygonal shape, from the viewpoint of controlling the shape and the size, a chemical reduction method or a photochemical reduction method is preferable.

In a case where the tabular metal particles having a triangular or higher polygonal shape are synthesized, for example, the corners of each tabular metal particle having a triangular or higher polygonal shape may be made blunt by performing an etching treatment using a dissolution species that dissolves silver, such as nitric acid or sodium nitrite, and an aging treatment through heating after the synthesis.

As the method of synthesizing the tabular metal particles, a method of fixing a seed crystal onto a surface of a transparent base material such as a film or glass in advance and then allowing crystals of the metal particles (for example, Ag) to grow in a tabular shape may be used in addition to the synthesis method described above.

The tabular metal particles may be subjected to another treatment in order to impart desired characteristics.

Another treatment is not particularly limited and can be appropriately selected depending on the purpose thereof. Examples of another treatment include a treatment of forming a high refractive index shell layer described in paragraphs [0068] to [0070] of JP2014-184688A and a treatment of adding various additives described in paragraphs [0072] and [0073] of JP2014-184688A.

The tabular metal particles may be used in the form of an aqueous dispersion liquid obtained by dispersing the particles in water.

Further, a commercially available product may be used as the tabular metal particles. Examples of the commercially available product of the tabular metal particles include gold nanoplate aqueous dispersion liquid Au-WPLC Series (for example, Au-WPLC3-C and Au-WPLC2-C, manufactured by Dai Nippon Toryo Co., Ltd.), silver nanoplate aqueous dispersion liquid Ag-WS Series (for example, Ag-WS6-C, manufactured by Dai Nippon Toryo Co., Ltd.), and aluminum particle dispersion liquids SB11015 and SB11020 (manufactured by ECKART GmbH).

The content of the tabular metal particles is preferably in a range of 1% by mass to 20% by mass, more preferably in a range of 1.0% by mass to 15% by mass, more preferably in a range of 1.5% by mass to 10% by mass, and particularly preferably in a range of 2.0% by mass to 8% by mass with respect to the total content of the ink.

In a case where the content of the tabular metal particles is 1% by mass or greater, the specular glossiness of an image becomes excellent. In a case where the content of the tabular metal particles is 20% by mass or less, the jettability of the ink is further improved.

### (First resin)

The ink composition according to the embodiment of the present disclosure contains at least one first resin (anionic polymer) having an anionic moiety. Through an interaction between the anionic moiety of the anionic polymer and the cationic moiety of the binder polymer, a viscosity improving effect is obtained, and the ink composition containing tabular metal particles has excellent jettability. In addition, alignment inhibition of the tabular metal particles by the anionic polymer is considered to be small, and degradation of the specular gloss derived from the tabular metal particles can be minimized compared to a solid viscosity improver which has been used in the related art.

The first resin having an anionic moiety is a resin different from the second resin described below.

Examples of the first resin having an anionic moiety include a polymer obtained by polymerizing a monomer containing an anionic functional group (anionic moiety) in an organic synthetic manner. The monomer containing an anionic functional group may be formed such that a plurality of anionic moieties are present in one monomer.

The polymerization includes synthesis of a polymer compound by cleaving an unsaturated group such as a carbon-carbon double bond or a carbon-carbon triple bond contained in a monomer or a ring such as an oxirane ring or a cyclopropane ring for repetitive addition. Examples of the polymerization include radical polymerization, anionic polymerization, and cationic polymerization. Among these, radical polymerization is preferable.

Examples of the anionic moiety include an anionic group such as a carboxy group or an acid group such as a sulfonic acid group or a phosphoric acid group; and a salt such as a salt of the carboxy group (carboxylate), a salt of the sulfonic acid group (sulfonate), or a salt of a phosphoric acid group (phosphate). As the anionic moiety, a sulfonic acid group and a salt of the sulfonic acid group are preferable.

Examples of the monomer having an anionic moiety include (1) α,β-unsaturated carboxylic acid having 3 to 10 carbon atoms and a salt thereof (such as acrylic acid and a salt thereof, methacrylic acid and a salt thereof, crotonic acid and a salt thereof, isocrotonic acid and a salt thereof, maleic acid and a salt thereof, fumaric acid and a salt thereof, itaconic acid and a salt thereof, citraconic acid and a salt thereof, nadic acid and a salt thereof, methyl nadic acid and a salt thereof, a himic acid and a salt thereof, angelic acid and a salt thereof, tetrahydrophthalic acid and a salt thereof, sorbic acid and a salt thereof, or mesaconic acid and a salt thereof), (2) a vinyl compound containing a sulfonic acid group or a salt thereof (such as styrenesulfonic acid or a salt of styrenesulfonic acid), and (3) an alkyl ester containing a carboxy group or a salt thereof (such as 2-acryloyloxyethylsuccinic acid and a salt thereof, 2-acryloyloxyethylphthalic acid or a salt thereof, 2-methacryloxyethylsuccinic acid and a salt thereof, or 2-methacryloyloxyethylphthalic acid and a salt thereof).

The alkyl ester containing a carboxy group or a salt thereof is a compound in which a hydrogen atom in an alkyl moiety is substituted with a carboxy group or a salt thereof. The alkyl moiety has preferably 1 to 20 carbon atoms, more preferably 1 to 12 carbon atoms, and still more preferably 1 to 6 carbon atoms. Examples of the alkyl moiety include a methyl group, an ethyl group, an isopropyl group, an n-propyl group, an n-butyl group, a t-butyl group, an amyl group, a 2-ethylhexyl group, a nonyl group, a decarnyl group, a lauryl group, a cetyl group, a stearyl group, and a cyclohexyl group.

Examples of the salt include a salt of an alkali metal (such as sodium or potassium) and a salt of an alkaline earth metal (such as calcium). Among these, from the viewpoint that the pka is low, a sodium salt or a potassium salt is preferable.

Among the examples of the first resin, a resin which contains an acid group or a salt of the acid group and has a structural unit derived from a compound having a pka of 5 or less is preferable. In other words, as the first resin, a polymer which contains an acid group or a salt of the acid group and is obtained by polymerizing a monomer having a pka of 5 or less is preferable. In a case where the pka is 5 or less, since the degree of acid dissociation becomes large, the first resin easily interacts with the cationic moiety of the second resin (binder polymer) described below.

From the viewpoints of obtaining a viscosity improving effect with a small amount of a material and exhibiting excellent specular glossiness, it is preferable that the pka is as small as possible. The pka is preferably 0 or less and more preferably -0.5 or less. The lower limit of the pka is not limited, but is suitably -2.0 or greater.

As the first resin in the present disclosure, a polymer which contains an acid group or a salt of the acid group and is obtained by at least polymerizing a monomer having a pka of 0 or less or a polymer which contains an acid group or a salt of the acid group and has a structural unit derived from a monomer having a pka of 0 or less is preferable.

The pka is a -log value of an acid dissociation constant and is acquired by calculation using ACD/Percepta (manufactured by Fujitsu Ltd.).

In a case where the anionic moiety is a salt of an acid group, the pka of the salt is acquired as a monomer which is an acid.

Among the examples described above, suitable examples of the monomer having an anionic moiety include acrylic acid or a salt of the acrylic acid, methacrylic acid or a salt of the methacrylic acid, 2-acryloyloxyethylsuccinic acid or a salt of the 2-acryloyloxyethylsuccinic acid, 2-methacryloyloxyethylphthalic acid or a salt of the 2-methacryloyloxyethylphthalic acid, and styrenesulfonic acid or a salt of styrenesulfonic acid.

Among these, from the viewpoint of easily carrying out acid dissociation and being relatively inexpensive, as the monomer having an anionic moiety, sodium acrylate (pka = 4.2), sodium methacrylate (pka = 4.7), or sodium styrene sulfonate (pka = -0.56) is preferable.

The first resin having an anionic moiety may be a homopolymer obtained by using a single monomer having an anionic moiety or a copolymer obtained by copolymerizing monomers having two different anionic moieties. Further, the first resin having an anionic moiety may be a copolymer of a monomer having an anionic moiety and a monomer which does not have an anionic moiety.

Examples of the monomer which does not have an anionic moiety include an alkyl ester having an alkyl moiety with 1 to 20 carbon atoms, an alkyl ester having a hydroxyl group and an alkyl moiety (preferably an alkyl moiety with 1 to 20 carbon atoms), and an ester of alkylene glycol (preferably with an average repetition number of 1 to 1000) and α ,β-unsaturated carboxylic acid.

Examples of the alkyl group having 1 to 20 carbon atoms include a methyl group, an ethyl group, an isopropyl group, an n-propyl group, an n-butyl group, a t-butyl group, an amyl group, a 2-ethylhexyl group, a nonyl group, a decanyl group, a lauryl group, a cetyl group, a stearyl group, and a cyclohexyl group.

From the viewpoint that the first resin in the present disclosure easily interacts with the cationic moiety of the second resin described below, it is preferable that the first resin does not have a cationic moiety (a cationic functional group) and is a polymer which does not contain a monomer having a cationic moiety (a cationic functional group) as a polymerization component.

Specific examples of the first resin include polystyrenesulfonic acid, a salt of polystyrenesulfonic acid (preferably a sodium salt or a potassium salt), polyacrylic acid, and a salt of polyacrylic acid (preferably a sodium salt or a potassium salt). Among these, from the viewpoints of obtaining a high viscosity improving effect with a small amount of the material, excellent jettability, and excellent specular glossiness, polystyrenesulfonic acid or a salt of the polystyrenesulfonic acid (preferably a sodium salt or a potassium salt) is preferable.

The weight-average molecular weight (Mw) of the first resin is preferably in a range of 100000 to 500000. From the viewpoint of obtaining a higher viscosity improving effect compared to a case of using a low-molecular-weight compound, it is preferable that the weight-average molecular weight thereof is 100000 or greater. Further, from the viewpoint of preventing a nozzle from being clogged with the ink, it is more preferable that the weight-average molecular weight thereof is 500000 or less.

From the viewpoint of the viscosity improving effect, the weight-average molecular weight of the first resin is preferably in a range of 150000 to 500000 and more preferably in a range of 200000 to 500000.

In the present specification, the weight-average molecular weight indicates a value measured by gel permeation chromatography (GPC).

According to GPC, the measurement is performed using HLC-8020GPC (manufactured by Tosoh Corporation), three columns of TSKgel (registered trademark), Super Multipore HZ-H (manufactured by Tosoh Corporation, 4.6 mmID × 15 cm), and tetrahydrofuran (THF) as an eluent.

Further, according to GPC, the measurement is performed by setting the sample concentration to 0.45% by mass, the flow rate to 0.35 ml/min, the sample injection amount of 10 µl, and the measurement temperature of 40°C using a differential refractive index (RI) detector.

The calibration curve is prepared from eight "standard samples TSK standard, polystyrene" (manufactured by Tosoh Corporation): "F-40", "F-20", "F-4", "F-1", "A-5000", "A-2500", "A-1000", and "n-propylbenzene".

In the present disclosure, a combination of the first resin which contains an acid group or a salt of the acid group which is an anionic moiety, does not have a cationic moiety (cationic functional group), and has a structural unit derived from a compound with a pka of 0 or less and the second resin which has at least one cationic moiety selected from an amino group, an amido group, and a salt of the amino group is more preferable.

The content of the first resin in the ink composition according to the embodiment of the present disclosure is set to be in a range of 0.001% by mass to 60% by mass with respect to the total mass of the tabular metal particles.

A case where the content of the first resin is 0.001% by mass or greater indicates that the ink composition does not substantially contain the first resin. The jettability is improved without impairing the alignment of the tabular metal particles by the ink composition containing the first resin.

In a case where the content of the first resin is 60% by mass or less, the effect of improving the specular glossiness becomes excellent.

From the viewpoint of further improving the specular glossiness, the content of the first resin is preferably in a range of 1% by mass to 40% by mass, more preferably in a range of 5% by mass to 40% by mass, and still more preferably in a range of 5% by mass to 30% by mass.

It is preferable that the content ratio between the first resin and the second resin described below is in the range described below.

Specifically, the ratio (the ratio of the first resin/the second resin) of the content of the first resin to the content of the second resin described below is preferably in a range of 0.5 to 4 and more preferably in a range of 0.5 to 3.

From the viewpoint of a high viscosity improving effect, it is advantageous that the ratio of the content of the first resin to the content of the second resin is 0.5 or greater. Further, from the viewpoint of improving the specular glossiness, it is advantageous that the ratio of the content of the first resin to the content of the second resin is 4 or less.

### (Second resin)

The ink composition according to the embodiment of the present disclosure contains at least one second resin (binder polymer) having at least one cationic moiety selected from an amino group, an amido group, an imino group, a phosphonium group, a salt of the amino group, a salt of the amide group, a salt of the imino group, or a salt of the phosphonium group.

In a case where the ink composition contains the second resin, the tabular metal particles are dispersed and stably maintained. Further, since the second resin has a cationic moiety, the above-described anionic moiety of the first resin acts on the cationic moiety so that a bond is formed between the second resins and between the first resin and the second resin, and thus the ink composition exhibits the viscosity improving effect. In this manner, the jettability of the ink composition is improved.

Examples of the second resin include an amino group (-NH₂), an amido group (-NHR; R represents an optional substituent such as alkyl), an imino group (=NH), a phosphonium group (-PR₂; R represents a hydrogen atom or a substituent such as alkyl or aryl). Specifically, the second resin is appropriately selected from polymers having at least one cationic moiety selected from -PH₂, an alkylphosphonium group (such as a methylphosphonium group or a tetra-n-butylphosphonium group), an arylphosphonium group (a triphenylphosphonium group), a salt of an amino group, a salt of the amido group, a salt of an imino group, and a salt of the phosphonium group. Regardless of which cationic moiety the second resin has, the ink composition can exhibit the viscosity improving effect due to the action of the anionic moiety of the first resin. The salt functions as a cationic moiety through separation or the like in the aqueous ink composition.

In regard to the salt, the counter anion forming the salt is not particularly limited, and examples thereof include a halide ion and a hydroxide ion.

The salt of the phosphonium group is represented by PH₄⁺X⁻, R¹PH₃⁺X⁻, R²PH₂⁺X⁻, R³PH⁺X⁻, or R⁴P⁺X⁻ (R¹ to R⁴ represent an alkyl group or an aryl group, and X represents halogen).

From the viewpoint of further improving the dispersibility of the tabular metal particles, an amino group, an amido group, or a salt of the amino group is preferable as the cationic moiety.

Examples of the second resin include gelatin, polyethyleneimine, a polyvinyl acetal resin, a polyvinyl alcohol resin, a polyvinyl butyral resin, a polyacrylate resin, a polymethyl methacrylate resin, a polycarbonate resin, a polyvinyl chloride resin, a (saturated) polyester resin, a polyurethane resin, and a natural polymer other than gelatin.

Among these, from the viewpoint of further improving the dispersibility of the tabular metal particles, the second resin contains preferably gelatin or polyethyleneimine and more preferably gelatin.

Examples of the gelatin include alkali-treated gelatin accompanied by a treatment using an alkali such as lime in the process of induction from collagen; acid-treated gelatin accompanied by a treatment using an acid such as hydrochloric acid; enzyme-treated gelatin accompanied by a treatment using an enzyme such as an hydrolytic enzyme; oxygen-treated gelatin; modified gelatin (such as phthalated gelatin, succinated gelatin, or trimellitic gelatin) modified by a reagent containing one group which is capable of reacting an amino group, an imino group, a hydroxy group, or a carboxy group serving as a functional group contained in a gelatin molecule with these functional groups; and gelatin which has been typically used in the related art described from the 6-th line of the column lower left in page 222 to the last line of the column upper left in page 225 of JP 1987-215272A (JP-S62-215272A).

From the viewpoint of the dispersibility of the tabular metal particles in the ink, the weight-average molecular weight of the second resin (particularly gelatin) is preferably in a range of 5000 to 1000000, more preferably in a range of 10000 to 500000, and still more preferably in a range of 20000 to 200000.

The method of measuring the weight-average molecular weight is as described above.

In a case where the ink composition according to the embodiment of the present disclosure contains water and a dispersant other than gelatin, a water-soluble resin is preferable as the dispersant other than gelatin.

The concept of "water-soluble" in the present specification indicates a property in which 5 g or greater (preferably 10 g or greater) of the resin is dissolved in 100 g of water at 25°C.

The water-soluble resin can be appropriately selected from water-soluble resins other than the gelatin described above and then used.

The content of the second resin is preferably in a range of 1% by mass to 50% by mass with respect to the total mass of the tabular metal particles.

In a case where the content of the second resin is 1% by mass or greater, the tabular metal particles tend to be easily dispersed, and the dispersion of the tabular metal particles can be more stably maintained. Further, from the viewpoint of improving the specular glossiness, it is advantageous that the content of the second resin is 50% by mass or less.

From the viewpoint of the specular glossiness, the content of the second resin is more preferably in a range of 1% by mass to 30% by mass and still more preferably in a range of 1 % by mass to 20% by mass.

### (Water)

The ink composition according to the embodiment of the present disclosure contains water.

From the viewpoints of the handleability of the ink, reduction of the environmental load, and the like, it is preferable that the ink composition contains water.

The content of water in the ink composition is preferably 10% by mass or greater, more preferably 30% by mass or greater, still more preferably 40% by mass or greater, and particularly preferably 50% by mass or greater with respect to the total amount of the ink composition. Further, from the viewpoint of the jettability of the ink composition, the content of water in the ink composition is preferably 90% by mass or less, more preferably 80% by mass or less, and particularly preferably 70% by mass or less with respect to the total amount of the ink composition.

In a case where the ink composition according to the embodiment of the present disclosure contains water, it is preferable that the ink composition contains gelatin as the second resin described above. In this manner, since the dispersibility of the tabular metal particles is further improved, the jettability of the ink composition is further improved.

### (Organic solvent)

From the viewpoint of the jettability of the ink composition using an ink jet method, it is preferable that the ink composition according to the embodiment of the present disclosure contains an organic solvent. Among examples of the organic solvent, a water-soluble organic solvent is preferable as the organic solvent.

Further, the term "water-soluble" indicates a property in which 5 g or greater (preferably 10 g or greater) of the organic solvent is dissolved in 100 g of water at 25°C.

As the water-soluble organic solvent, any of known water-soluble organic solvent can be used without particular limitation.

Examples of the water-soluble organic solvent include alkanediols (polyhydric alcohols) such as glycerin, 1,2,6-hexanetriol, trimethylolpropane, ethylene glycol, propylene glycol, diethylene glycol, triethylene glycol, tetraethylene glycol, pentaethylene glycol, dipropylene glycol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol; alkyl alcohols having 1 to 4 carbon atoms such as ethanol, methanol, butanol, propanol, and isopropanol; glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-t-butyl ether, 1-methyl-1-methoxy butanol, propylene glycol monomethyl ether, propylene glycol monoethyl ether, propylene glycol mono-t-butyl ether, propylene glycol mono-n-propyl ether, propylene glycol mono-iso-propyl ether, dipropylene glycol monomethyl ether, dipropylene glycol monoethyl ether, tripropylene glycol monomethyl ether, dipropylene glycol mono-n-propyl ether, and dipropylene glycol mono-iso-propyl ether; and pyrrolidones such as 2-pyrrolidone and N-methyl-2-pyrrolidone.

These solvents can be used by appropriately selecting one or two or more kinds thereof.

The water-soluble organic solvent can be appropriately selected from, for example, the water-soluble organic solvents described in paragraphs 0176 to 0179 of JP2011-046872A and the water-soluble organic solvents described in paragraphs 0063 to 0074 of JP2013-018846A in addition to those described above.

Further, polyhydric alcohols are also useful as an anti-drying agent or a wetting agent. Examples of the polyhydric alcohols include polyhydric alcohols described in paragraph 0117 of JP2011-042150A.

In addition, other water-soluble organic solvents can be appropriately selected from, for example, the water-soluble organic solvents described in paragraphs 0176 to 0179 of JP2011-046872A and the water-soluble organic solvents described in paragraphs 0063 to 0074 of JP2013-018846A in addition to those described above.

The water-soluble organic solvent preferably contains at least one organic solvent having a boiling point of 150°C or higher and a solubility parameter (hereinafter, also referred to as an "SP" value) of 24 MPa^{1/2} or greater.

In a case where the boiling point of the specific organic solvent is 150°C or higher (in other words, the boiling point of the water-soluble organic solvent is higher than the boiling point of water), degradation of the jettability of the ink composition due to volatilization of the solvent is further suppressed. From the viewpoint of the jettability of the ink composition, the boiling point of the water-soluble organic solvent is more preferably 170°C or higher and still more preferably 180°C or higher. The upper limit of the boiling point thereof is not particularly limited. For example, from the viewpoint of the viscosity of the ink composition, the upper limit of the boiling point is preferably 300°C. The boiling point is acquired using a boiling point measuring device (DosaTherm300, manufactured by Titan Technologies, Inc.). In the present specification, the boiling point indicates a boiling point measured under the atmospheric pressure.

Further, in a case where the SP value of the water-soluble organic solvent is 24 MPa^{1/2} or greater, the aligning properties of the tabular metal particles in the ink composition (that is, the image) applied onto the base material are improved so that the specular glossiness of the image is further improved.

The SP value of the water-soluble organic solvent is more preferably 25 MPa^{1/2} or greater, still more preferably 26 MPa^{1/2} or greater, and particularly preferably 27 MPa^{1/2} or greater. The upper limit of the SP value of the water-soluble organic solvent is not particularly limited. From the viewpoint of the viscosity of the ink composition, the upper limit of the SP value is preferably 40 MPa^{1/2}.

The solubility parameter (SP value) is as value [unit: MPa^{1/2}] acquired using an Okitsu method. The Okitsu method is a known method of calculating the SP value in the related art and is described in Journal of the Adhesion Society of Japan, Vol. 29, No. 6 (1993), p. 249 to 259.

Specific examples of the water-soluble organic solvent having a boiling point of 150°C or higher and an SP value of 24 MPa^{1/2} or greater include ethylene glycol (197°C, 29.9 MPa^{1/2}), diethylene glycol (244°C, 24.8 MPa^{1/2}), propylene glycol (188°C, 27.6 MPa^{1/2}), 1,4-butanediol (230°C, 30.7 MPa^{1/2}), 1,2-pentanediol (206°C, 28.6 MPa^{1/2}), 1,5-pentanediol (206°C, 29.0 MPa^{1/2}), 1,6-hexanediol (250°C, 27.7 MPa^{1/2}), glycerin (290°C, 33.8 MPa^{1/2}), formamide (210°C, 39.3 MPa^{1/2}), dimethylformamide (153°C, 30.6 MPa^{1/2}), triethanolamine (208°C (20 hPa), 32.3 MPa^{1/2}), polyethylene glycol (250°C, 26.1 MPa^{1/2}), 1,2-hexanediol (223°C, 24.1 MPa^{1/2}), dipropylene glycol (230°C, 27.1 MPa^{1/2}), 1,2-butanediol (191°C (747 mmHg, value in the document), 26.1 MPa^{1/2}).

In the description above, the numerical values in parentheses indicate boiling points (unit: °C) and SP values (unit: MPa^{1/2}) in order of the description.

Among these, from the viewpoint of the jettability of the ink composition, it is preferable to use propylene glycol, glycerin, or ethylene glycol serving as a water-soluble organic solvent in a case where the ink composition contains an organic solvent.

In the case where the ink composition according to the embodiment of the present disclosure contains an organic solvent (preferably a water-soluble organic solvent), the content of the organic solvent is preferably in a range of 5% by mass to 80% by mass, more preferably in a range of 5% by mass to 70% by mass, still more preferably in a range of 5% by mass to 50% by mass, and particularly preferably in a range of 10% by mass to 40% by mass with respect to the total amount of the ink composition.

### (Other components)

The ink composition according to the embodiment of the present disclosure may contain components other than the above-described components.

Examples of other components include surfactants, waxes, saccharides, derivative of saccharides, and other additive components (preservatives and antifoaming agents).

### - Surfactant -

The ink composition according to the embodiment of the present disclosure may contain at least one surfactant.

A fluorine-based surfactant is preferable as the surfactant. The fluorine-based surfactant is not particularly limited and can be selected from known fluorine-based surfactants.

Examples of the fluorine-based surfactant include fluorine-based surfactants described in "Surfactant Handbook" (edited by Ichiro Nishi, Ichiro Imai, and Masatachi Kasai, Sangyo Tosho Publishing Co., Ltd., 1960).

As the fluorine-based surfactant, a fluorine-based surfactant containing a perfluoro group in a molecule and having a refractive index of 1.30 to 1.42 (preferably in a range of 1.32 to 1.40) is preferable. In a case where the fluorine-based surfactant has a refractive index of 1.30 to 1.42, the specular glossiness of the formed image can be further improved.

The refractive index can be measured using a Kalnew precision refractometer (KPR-3000, manufactured by Shimadzu Corporation). In a case where the fluorine-based surfactant is a liquid, the refractive index is measured by storing the fluorine-based surfactant in a cell. In a case where the fluorine-based surfactant is a solid, the refractive index is measured using a V block method of placing the solid sample in a V block prism attached to a Kalnew precision refractometer (KPR-3000, manufactured by Shimadzu Corporation).

In a case where the fluorine-based surfactant contains a perfluoro group in a molecule, the refractive index of the fluorine-based surfactant is easily adjusted to be in the above-described range, and the surface tension of the ink composition can be adjusted with a relatively small amount of the fluorine-based surfactant.

Examples of the fluorine-based surfactant containing a perfluoro group in a molecule and having a refractive index of 1.30 to 1.42 include an anionic surfactant such as perfluoroalkyl carbonate, perfluoroalkyl sulfonate, or perfluoroalkyl phosphoric acid ester; an amphoteric surfactant such as perfluoroalkyl betaine; a cationic surfactant such as perfluoroalkyltrimethylammonium salt; and a nonionic surfactant such as perfluoroalkylamine oxide, a perfluoroalkylethylene oxide adduct, an oligomer containing a perfluoroalkyl group and a hydrophilic group, an oligomer containing a perfluoroalkyl group and a lipophilic group, an oligomer containing a perfluoroalkyl group, a hydrophilic group, and a lipophilic group, or urethane containing a perfluoroalkyl group and a lipophilic group. Further, suitable examples thereof include fluorine-based surfactants described in JP1987-170950A (JP-S62-170950A), JP1987-226143A (JP-S62-226143A), and JP1985-168144A (JP-S60-168144A).

As the fluorine-based surfactant, a commercially available product may be used. Examples of the commercially available product of the fluorine-based surfactant include SURFLON (registered trademark) Series (S-243, S-242, and the like, manufactured by AGC SEIMI CHEMICAL CO., LTD.), MEGAFACE (registered trademark) Series (F-444, F-410, and the like, manufactured by DIC Corporation), NOVEC (registered trademark) Series (for example, 27002, manufactured by 3M Japan Ltd.), and ZONYL Series (for example, FSE, manufactured by E. I. du Pont de Nemours and Company).

The content of the fluorine-based surfactant in the ink composition is preferably in a range of 0.01% by mass to 5.0% by mass, more preferably in a range of 0.05% by mass to 1.0% by mass, and still more preferably in a range of 0.1% by mass to 5.0% by mass with respect to the total amount of the ink composition.

In a case where the content of the fluorine-based surfactant is in the above-described range, the surface tension of the ink composition is likely to be adjusted such that the jettability of the ink composition is further improved.

### - Wax -

The ink composition according to the embodiment of the present disclosure may contain a wax. In this manner, the rub resistance of a recorded material is further improved.

Examples of the wax include resin waxes such as paraffin wax, paraffin-mixed wax, polyethylene wax, polyethylene-mixed wax, oxidized high-density polyethylene wax, polypropylene wax, polypropylene-mixed wax, carnauba wax, and amido wax.

Among these, paraffin-mixed wax, polyethylene wax, or polyethylene-mixed wax is preferable.

As the wax, a commercially available wax dispersion liquid may be used.

Examples of the commercially available wax dispersion liquid (emulsion wax) include AQUACER 507 (manufactured by BYK-Chemie GmbH), AQUACER 515 (manufactured by BYK-Chemie GmbH), AQUACER 531 (manufactured by BYK-Chemie GmbH), AQUACER 537 (manufactured by BYK-Chemie GmbH), AQUACER 539 (manufactured by BYK-Chemie GmbH), CERAFLOUR 990 (manufactured by BYK-Chemie GmbH), and CERAFLOUR 995 (manufactured by BYK-Chemie GmbH).

In a case where the ink composition according to the embodiment of the present disclosure contains a wax, the above-described waxes may be used alone or in combination of two or more kinds thereof.

In a case where the ink composition contains a wax, the content of the wax is not particularly limited, but is preferably in a range of 0.02% by mass to 1.5% by mass with respect to the total amount of the ink composition. In a case where the content of the wax is 0.02% by mass or greater, the rub resistance of the image is further improved. Further, in a case where the content of the wax is 1.5% by mass or less, the specular glossiness of the image is further improved.

### - Saccharide and derivative of saccharide -

The ink composition according to the embodiment of the present disclosure may contain at least one of a saccharide or a derivative of the saccharide (hereinafter, also referred to as "saccharides"). In this manner, the gas resistance of the printed material is further improved.

The saccharides are not particularly limited, but a tetra- or higher saccharide is preferable from the viewpoint of improving the gas resistance of the printed material and the jetting stability of the ink composition.

In a case where the ink composition according to the embodiment of the present disclosure contains saccharides, the ink composition according to the embodiment of the present disclosure may contain only one or two or more kinds of saccharides. A preferable aspect is a case where the ink composition contains a monosaccharide and a di- or higher saccharide, and a particularly preferable aspect is a case where the ink composition contains a monosaccharide and a tetra- or higher saccharide.

In a case where the ink composition contains a monosaccharide and a tetra- or higher saccharide, it is preferable that the content of the monosaccharide is 45% by mass or less and the content of the tetra- or higher saccharide is 10% by mass or greater and particularly preferable that the content of the monosaccharide is 7% by mass or less and the content of the tetra- or higher saccharide is 70% by mass or greater.

### Examples of the saccharide include monosaccharides and polysaccharides.

Specific examples of the saccharide include glucose, ribose, mannitol, mannose, fructose, ribose, xylose, arabinose, galactose, aldonic acid, glucitol (sorbit), maltose, cellobiose, lactose, sucrose, trehalose, and maltotriose.

The polysaccharide indicates a saccharide in a broad sense, and the concept of "polysaccharide" includes substances which are widely present in the natural world such as alginic acid, α-cyclodextrin, and cellulose.

Examples of the derivative of the saccharide include reducing sugar (such as sugar alcohol), oxidized sugar (such as aldonic acid or uronic acid), amino sugar, and thiosugar.

Examples of the sugar alcohol include sugar alcohol represented by HOCH₂(CHOH)ₙCH₂OH [n represents an integer of 2 to 5].

The ink composition containing a saccharide may be prepared using commercially available mixed sugar (syrup).

Examples of the commercially available mixed sugar (syrup) include a saccharified reduced starch such as HS-20, HS-30, HS-40, HS-60, HS-300, or HS-500 (all trade names, manufactured by Hayashibara Co., Ltd.), HALLODEX, and MABIT (both trade names, manufactured by Hayashibara Co., Ltd.).

In a case where the ink composition contains saccharides, from the viewpoint of the jetting stability of the ink composition, the content of the saccharides is preferably 45% by mass or less with respect to the total amount of the ink composition. From the viewpoints of the jetting stability of the ink composition and the rub resistance of the image, the content of the saccharides is preferably in a range of 2% by mass to 45% by mass, more preferably in a range of 2% by mass to 25% by mass, still more preferably in a range of 5% by mass to 20% by mass, and particularly preferably in a range of 5% by mass to 15% by mass with respect to the total amount of the ink composition.

### - Other components to be added -

The ink composition according to the embodiment of the present disclosure may contain components to be added other than those described above.

Examples of other components include polymer particles, a colorant, a solid wetting agent (urea or the like), an antifading agent, an emulsification stabilizer, a penetration enhancer, an ultraviolet absorbing agent, a fungicide, a pH adjuster, a viscosity adjuster, a rust inhibitor, and a chelating agent.

The preservative can refer to the description in paragraphs [0073] to [0090] of JP2014-184688A.

The antifoaming agent can refer to the description in paragraphs [0091] and [0092] of JP2014-184688A.

Examples of the polymer particles include self-dispersing polymer particles described in paragraphs 0090 to 0121 of JP2010-064480A, paragraphs 0130 to 0167 of JP2011-068085A, and paragraphs 0180 to 0234 of JP2011-062998A.

The ink composition according to the embodiment of the present disclosure may contain a colorant (a pigment, a dye, or the like) as necessary.

Further, the ink composition according to the embodiment of the present disclosure may be prepared to a photocurable ink containing a polymerizable compound. In this case, it is preferable that the ink composition further contains a polymerization initiator.

Examples of the polymerizable compound include the polymerizable compounds (such as a bi- or higher functional (meth)acrylamide compound) described in paragraphs 0128 to 0144 of JP2011-184628A, paragraphs 0019 to 0034 of JP2011-178896A, and paragraphs 0065 to 0086 of JP2015-025076A.

Examples of the polymerization initiator include known polymerization initiators described in paragraphs 0186 to 0190 of JP2011-184628A, paragraphs 0126 to 0130 of JP2011-178896A, and paragraphs 0041 to 0064 of JP2015-025076A.

### - Preferable physical properties of ink composition -

The physical properties of the ink composition according to the embodiment of the present disclosure are not particularly limited, but the following physical properties are preferable.

### (pH)

The pH of the ink composition according to the embodiment of the present disclosure at 25°C (± 1°C) is preferably 7.5 or greater. The pH (25°C ± 1°C) of the ink composition is preferably in a range of 7.5 to 13 and more preferably in a range of 7.5 to 10.

The viscosity of the ink composition according to the embodiment of the present disclosure is preferably in a range of 0.5 mPa·s to 10 mPa·s and more preferably in a range of 1 mPa·s to 7 mPa·s.

The viscosity is measured using a VISCOMETER TV-22 (manufactured by TOKI SANGYO CO., LTD.) under a temperature condition of 30°C.

The surface tension of the ink composition according to the embodiment of the present disclosure at 25°C (± 1°C) is preferably 60 mN/m or less, more preferably in a range of 20 mN/m to 50 mN/m, and still more preferably in a range of 25 mN/m to 45 mN/m. In a case where the base material is a resin base material, from the viewpoint of improving the wettability, it is advantageous that the surface tension of the ink composition is 60 mN/m or less. The surface tension is measured using an Automatic Surface Tensiometer CBVP-Z (manufactured by Kyowa Interface Science, Inc.) according to a plate method.

### - Applications of ink composition -

From the viewpoint of effectively obtaining the effect of specular glossiness, it is preferable that the ink composition according to the embodiment of the present disclosure is used for forming an image having a minimum width of 1 mm or greater. The minimum width of the image is more preferably 2 mm or greater and particularly preferably 3 mm or greater. The upper limit of the minimum width of the image is not particularly limited.

The ink composition according to the embodiment of the present disclosure has been used for general recording of an image according to an ink jet method without particular limitation, but it is preferable that the ink composition is used for recording a decorative image according to an ink jet method.

The "recording of a decorative image" indicates general recording of an image for the purpose of adding decoration to an object. The recording of a decorative image is different from printing carried out for the purpose other than the above-described purpose (for example, printing for printing an electronic circuit).

### - Method of producing ink composition -

A method of producing the ink composition according to the embodiment of the present disclosure is not particularly limited, and a method of mixing the above-described components can be employed. It is preferable that the ink composition according to the embodiment of the present disclosure is produced using a production method (hereinafter, referred to as a "production method A") including a step of preparing a dispersion liquid that contains tabular metal particles, and a step of mixing at least a dispersion liquid, the first resin, and the second resin, and other components such as an organic solvent and a surfactant as necessary. In a case where the dispersion liquid contains water, water is not necessarily mixed during the step of mixing the dispersion liquid, the first resin, and the like. However, regardless of whether the dispersion liquid contains water in advance, water may be mixed during the step of mixing the dispersion liquid, the first resin, and the like.

### <Ink set>

An ink set according to the embodiment of the present disclosure includes a first ink which is the above-described ink composition according to the embodiment of the present disclosure and a second ink which is different from the first ink and contains a colorant. The details of the first ink are the same as described above, and the preferable aspects thereof are the same as described above.

The second ink contains at least one selected from an achromatic ink containing a black or white colorant or a chromatic ink containing a red (R), green (G), blue (B), yellow (Y), magenta (M), or cyan (C) colorant.

In other words, the ink set according to the embodiment of the present disclosure is an ink set which is capable of recording an image obtained by combining a specular image having specular glossiness with a colored image that does not have specular gloss.

A preferable application of the ink set according to the embodiment of the present disclosure is an application in which an image (specular image) formed by using the first ink and a colored image formed by using the second ink are formed in parallel with each other or in an overlapping manner on the base material. In this application, any of the specular image formed by using the first ink or the colored image formed by using the second ink may be an underlayer (the layer on a side close to the base material). Among examples of such a mode, an image formed by setting the specular image formed by using the first ink as the underlayer (the layer on a side close to the base material) and the colored image formed by using the second ink as the upper layer (the layer on a side far from the base material) is preferable. In such an image, a colored image with specular glossiness is obtained in a position where the specular image formed by using the first ink and the colored image formed by using the second ink overlap with each other.

Further, in a case where the colored image formed by using the second ink is set as the underlayer and the specular image formed by using the first ink is set as the upper layer, the colored image formed by using the second ink can be hidden by the image (for example, a silver image) formed by using the first ink in a position where the specular image formed by using the first ink and the colored image formed by using the second ink overlap with each other.

### - Second ink -

As the second ink, a known ink containing a colorant can be used without particular limitation. The second ink may be an aqueous ink containing water as a main solvent or a solvent-based ink containing a solvent as a main solvent.

Further, the second ink may be a photocurable ink containing a polymerizable compound (and preferably a photopolymerization initiator).

It is preferable that the second ink contains a colorant (a pigment, a dye, or the like). From the viewpoints of light fastness of an image and the weather fastness of an image, a pigment is preferable as the colorant.

The pigment is not particularly limited and can be appropriately selected depending on the purpose thereof. Examples of the pigment include known organic pigments and inorganic pigments. Further, examples of the pigment also include commercially available pigment dispersions and surface-treated pigments (a pigment obtained by being dispersed in water, a liquid organic compound, or an insoluble resin using the pigment as a dispersion medium and a pigment whose surface is treated with a resin or a pigment derivative, and the like).

Examples of the organic pigments and inorganic pigments include a yellow pigment, a red pigment, a magenta pigment, a blue pigment, a cyan pigment, a green pigment, an orange pigment, a purple pigment, a brown pigment, a black pigment, and a white pigment.

In a case where a pigment is used as the colorant, a pigment dispersant may be used as necessary.

The coloring material such as a pigment and the pigment dispersant can appropriately refer to the description in paragraphs [0180] to [0200] of JP2014-040529A.

The pigment may be used alone or in combination of two or more kinds thereof.

From the viewpoint of the image density, the content of the pigment in the second ink is preferably 1% by mass or greater, more preferably in a range of 1% by mass to 20% by mass, and still more preferably in a range of 2% by mass to 10% by mass with respect to the amount of the second ink.

In the ink set according to the embodiment of the present disclosure, it is preferable that the content of the colorant in the first ink is less than 1% by mass (more preferably 0.1% by mass or less) with respect to the total amount of the first ink and the content of the colorant in the second ink is 1% by mass or greater (more preferably in a range of 1% by mass to 20% by mass and still more preferably in a range of 2% by mass to 10% by mass) with respect to the total amount of the second ink.

### <Image recording method>

An image recording method according to the embodiment of the present disclosure includes an ink applying step of applying the above-described ink composition according to the embodiment of the present disclosure to the base material using an ink jet method.

As the base material, a paper base material, a resin base material, or the like can be used without particular limitation.

Examples of the paper base material include plain paper, glossy paper, and coated paper.

The glossy paper is a paper base material comprising base paper and polymer fine particles or porous fine particles disposed on the base paper. Commercially available products of the glossy paper are not particularly limited. Examples of the commercially available products of the glossy paper include "KASSAI (registered trademark)" (manufactured by Fujifilm corporation), photo paper and photo glossy paper (manufactured by Seiko Epson Corporation), and glossy paper (manufactured by Konica Minolta, Inc.).

Coated paper is a paper base material comprising base paper and a coating layer disposed on the base paper. Commercially available products of the coated paper are not particularly limited. Examples of the commercially available products of the coated paper include "OK TOP COAT (registered trademark) +" (manufactured by Oji Paper Co., Ltd.), and "AURORA COAT" (manufactured by Nippon Paper Industries Co., Ltd.).

From the viewpoint that an image with excellent specular glossiness is obtained, as the paper base material, glossy paper or coated paper is preferable, and glossy paper is more preferable.

Examples of the resin base material include a resin film.

Examples of the resin in the resin base material (such as a resin film) include a polyvinyl chloride (PVC) resin, cellulose diacetate, cellulose triacetate, cellulose propionate, cellulose butyrate, cellulose acetate butyrate, cellulose nitrate, polyethylene terephthalate (PET), polyethylene naphthalate (PEN), polyethylene, polystyrene, polypropylene, polycarbonate, polyvinyl acetal, and an acrylic resin. Among these, from the viewpoint that an image with excellent specular glossiness can be obtained, polyvinyl chloride (PVC), polyethylene terephthalate (PET), or cellulose triacetate is preferable.

As the base material used for the image recording method according to the embodiment of the present disclosure, from the viewpoint that an image having excellent specular glossiness can be recorded, glossy paper, coated paper, or a resin base material is preferable, glossy paper or a resin base material is more preferable, and a resin base material is particularly preferable.

Further, the base material used for the image recording method according to the embodiment of the present disclosure may be a base material (that is, a printed material) on which an image (hereinafter, also referred to as an image X) has been formed. In other words, the image recording method according to the embodiment of the present disclosure may be a method of recording an image using the ink composition according to the embodiment of the present disclosure on the image X of the base material (printed material) on which the image X has been formed.

The system of the ink jet method is not particularly limited and can be appropriately selected from known systems, and examples of the known system of the ink jet method include an electric charge control system of jetting an ink composition using electrostatic attraction; a drop-on-demand system (pressure pulse system) of using the vibration pressure of a piezoelectric element; an acoustic ink jet system of converting an electric signal to an acoustic beam, irradiating an ink composition with the acoustic beam, and jetting the ink composition using a radiation pressure; and a thermal ink jet (Bubble Jet (registered trademark)) system of forming bubbles by heating an ink composition to use the generated pressure.

The ink jet head system used for the ink jet method may be an on-demand system or a continuous system.

Specific examples of the system of jetting the ink composition from the ink jet head include an electro-mechanical conversion system (a single cavity type, a double cavity type, a vendor type, a piston type, a share mode type, a shared wall type, or the like); an electricity-heat conversion system (a thermal ink jet type, a Bubble Jet (registered trademark) type, or the like); an electrostatic attraction system (an electric field control type, a silt jet type, or the like); and a discharge system (a spark jet type), and any of these jetting systems may be used.

Further, an ink composition nozzle and the like used for jetting the ink composition according to the ink jet method are not particularly limited and can be appropriately selected depending on the purpose thereof.

Examples of the recording system in the ink jet method include a shuttle system of performing recording while scanning the head in a width direction of the base material using a single serial head; and a line system (single pass system) of using a line head in which recording elements are arranged over the entire area on one side of the base material.

It is preferable that the ink applying step is a step of applying the ink composition to the base material by jetting the ink composition from a nozzle of the ink jet head which has a nozzle diameter of less than 25 µm.

In a case where the average equivalent circle diameter of the tabular metal particles is less than 500 nm, clogging of the nozzle with the ink composition is suppressed even in a case where the ink composition is jetted from the nozzle having a nozzle diameter of less than 25 µm. From the viewpoint that an image with high resolution can be formed, it is advantageous that the nozzle diameter of the nozzle is less than 25 µm.

The nozzle diameter thereof is preferably 5 µm or greater and less than 25 µm, more preferably 10 µm or greater and less than 25 µm, and particularly preferably 15 µm and less than 25 µm.

The image recording method according to the embodiment of the present disclosure may include a step of drying the ink composition applied to the base material.

The drying may be natural drying at room temperature or heat drying. In a case where a resin base material is used as the base material, heat drying is preferable.

The means for heat drying is not particularly limited, and a heat drum, warm air, an infrared lamp, a heat oven, and heat plate heating can be used.

The temperature for heat drying is preferably 30°C or higher, more preferably in a range of 30°C to 70°C, and still more preferably in a range of 30°C to 60°C. The time for heat drying can be appropriately set in consideration of the composition of the ink composition and the amount of the ink composition to be jetted and is preferably in a range of 1 minute to 180 minutes, more preferably in a range of 5 minutes to 120 minutes, and particularly preferably in a range of 5 minutes to 60 minutes.

The image recording method according to the embodiment of the present disclosure may be performed using the above-described ink set according to the embodiment of the present disclosure.

In a case where the above-described ink set according to the embodiment of the present disclosure is used, the image recording method includes a first ink applying step of applying the first ink to the base material using the ink jet method and a second ink applying step of applying the second ink to the base material using the ink jet method.

Any of the first ink applying step or the second ink applying step may be performed first.

Further, in the image recording method performed using the ink set according to the embodiment of the present disclosure, a step of drying the ink composition may be provided at least at the timing between the first ink applying step and the second ink applying step or after the step to be performed later between the first ink applying step and the second ink applying step. The step of drying the ink composition is as described above.

A preferable aspect of the image recording method in a case where the first ink applying step is set as a pre-step and the second ink applying step is set as a post-step is an aspect in which the image recording method includes the first ink applying step of applying the first ink to the base material and the second ink applying step of applying the second ink onto the first ink which has been applied to the base material. According to this aspect, a colored image having specular glossiness can be formed on a portion where the specular image formed by using the first ink and the colored image formed by using the second ink overlap with each other.

Further, a preferable aspect of the image recording method in a case where the second ink applying step is set as a pre-step and the first ink applying step is set as a post-step is an aspect in which the image recording method includes the second ink applying step of applying the second ink to the base material and the first ink applying step of applying the first ink onto the second ink which has been applied to the base material. According to this aspect, the colored image formed by using the second ink can be hidden by the image (for example, a silver image) formed by using the first ink in a portion where the image formed by using the first ink and the image formed by using the second ink overlap with each other.

The preferable aspect of the first ink applying step is the same as the preferable aspect of the above-described ink applying step.

As a method of applying the second ink in the second ink applying step, any method of applying an ink composition to a base material in known image recording methods can be used without particular limitation.

The second ink applying step may be performed under conditions which are the same as or different from the conditions for the first ink applying step.

### <Recorded material>

A recorded material according to the embodiment of the present disclosure comprises a base material, and an image (that is, a specular image) which is disposed on the base material and contains tabular metal particles having an average aspect ratio of 3 to 100, a first resin having an anionic moiety, and "a second resin having at least one cationic moiety selected from an amino group, an amido group, an imino group, a phosphonium group, a salt of the amino group, a salt of the amido group, and a salt of the imino group".

The details of the base material and the components contained in the image are the same as described above, and the preferable aspects thereof are the same as described above.

Further, an aspect in which the recorded material comprises a colored image containing a colorant provided in at least one place between the base material and the image (specular image) or on the image (specular image) is preferable.

In the aspect in which the colored image containing a colorant is comprised on the image (specular image), a colored image having specular glossiness is provided on a portion where the specular image and the colored image overlap with each other.

Further, in the aspect in which the colored image containing a colorant is comprised between the base material and the image (specular image), the colored image is hidden by the specular image (for example, a silver image) in a portion where the specular image and the colored image overlap with each other.

### Examples

Hereinafter, the present invention will be described in more detail based on the following examples. However, the present invention is not limited to the following examples unless the gist thereof is overstepped. Further, "parts" are on a mass basis unless otherwise specified.

### <Preparation of metal particle dispersion liquid A>

A metal particle dispersion liquid A was prepared as a dispersion liquid of metal particles. The details will be described below.

### - Preparation of metal particle-forming liquid -

A reaction container made of high Cr-Ni-Mo stainless steel (NTKR-4, manufactured by Nippon Metal Industry Co., Ltd.) was prepared. This reaction container comprises an agitator formed by attaching four propellers made of NTKR-4 and four paddles made of NTKR-4 to a shaft made of stainless steel (SUS316L).

While 13 liters (L) of ion exchange water was stirred using the agitator in the reaction container, 10 g/L of a 1.0 L trisodium citrate (anhydride) aqueous solution was added thereto. The temperature of the obtained liquid was maintained to 35°C.

8.0 g/L of a 0.68 L polystyrene sulfonic acid aqueous solution was added to the liquid whose temperature was maintained to 35°C, and 0.041 L of a sodium borohydride aqueous solution in which the concentration of the sodium borohydride was adjusted to 23 g/L was further added thereto. The concentration of the sodium borohydride aqueous solution was adjusted using 0.04 N (mol/L) of a sodium hydroxide (NaOH) aqueous solution.

0.10 g/L of a 13 L silver nitrate aqueous solution was further added to the liquid, to which the sodium borohydride aqueous solution had been added, at a rate of 5.0 L/min.

10 g/L of a 2.0 L trisodium citrate (anhydride) aqueous solution and 11 L of ion exchange water were further added to the obtained liquid, and 80 g/L of a 0.68 L potassium hydroquinone sulfonate aqueous solution was further added thereto.

Next, the rate of the stirring was increased to 800 rpm (round per minute; the same applies hereinafter), 0.10 g/L of a 8.1 L silver nitrate aqueous solution was added to the solution at a rate of 0.95 L/min, and the temperature of the obtained liquid was decreased to 30°C.

Next, 44 g/L of a 8.0 L methyl hydroquinone aqueous solution was added to the resulting liquid cooled to 30°C, and the total amount of the gelatin aqueous solution at 40°C described below was added thereto.

Thereafter, the rate of the stirring was increased to 1200 rpm, the total amount of the silver sulfite white precipitate mixed solution described below was added thereto. The pH of the liquid to which the silver sulfite white precipitate mixed solution had been added was gradually changed.

At the time at which the change in pH of the liquid was stopped, 1 N (mol/L) of a 5.0 L NaOH aqueous solution was added to the resulting liquid at a rate of 0.33 L/min. The pH of the obtained liquid was adjusted to 7.0 ± 1.0 using NaOH and citric acid (anhydride). Next, 2.0 g/L of a 0.18 L sodium 1-(m-sulfophenyl)-5-mercaptotetrazole aqueous solution was added to the liquid after the adjustment of the pH thereof, and 70 g/L of a 0.078 L 1,2-benzisothiazolin-3-one aqueous solution which was dissolved by being adjusted to be alkaline was added thereto.

In the manner described above, a metal particle-forming liquid was obtained.

The metal particle-forming liquid was liquid-separated and accommodated in 20 L of a Union Container II type container (a low-density polyethylene container, manufactured by AS ONE Corporation) and stored at 30°C.

Further, the physical characteristics of the metal particle-forming liquid were as follows.
- pH at 25°C = 9.4
   The pH was measured by adjusting the temperature of the metal particle-forming liquid to 25°C using KR5E (manufactured by AS ONE Corporation).
- Electrical conductivity = 8.1 mS/cm
   The electrical conductivity was measured using CM-25R (manufactured by manufactured by DKK-TOA Corporation).
- Viscosity = 2.1 mPa·s
   The viscosity was measured by adjusting the temperature of the metal particle-forming liquid to 25°C using SV-10 (manufactured by A & D Co., Ltd.).

### - Preparation of gelatin aqueous solution -

A dissolution tank made of SUS316L comprising an agitator made of SUS316L was prepared.

16.7 L of ion exchange water was poured into this dissolution tank, and 1.4 kg of alkali-treated bovine bone gelatin (weight-average molecular weight according to GPC: 200000) which had been subjected to a deionization treatment was added to the dissolution tank while the ion exchange water was stirred using the agitator at a low speed.

0.91 kg of alkali-treated bovine bone gelatin (weight-average molecular weight according to GPC: 21000) which had been subjected to a deionization treatment, a proteolytic enzyme treatment, and an oxidation treatment with hydrogen peroxide was further added to the obtained liquid.

Thereafter, the temperature of the liquid was increased to 40°C, and the gelatin was allowed to be completely dissolved therein by simultaneously performing swelling and dissolving of the gelatin.

In this manner, a gelatin aqueous solution was prepared.

### - Preparation of silver sulfite white precipitate mixed solution -

A dissolution tank made of SUS316L comprising an agitator made of SUS316L was prepared.

8.2 L of ion exchange water was poured into this dissolution tank, and 100 g/L of a 8.2 L silver nitrate aqueous solution was added thereto.

While the obtained liquid was stirred using the agitator at a high speed, 140 g/L of a 2.7 L sodium sulfite aqueous solution was added thereto in a short time, thereby preparing a mixed solution containing a white precipitate of silver sulfite (a silver sulfite white precipitate mixed solution).

This silver sulfite white precipitate mixed solution was prepared immediately before use.

### - Preparation of metal particle dispersion liquid A (desalting treatment and re-dispersing treatment) -

The metal particle-forming liquid was subjected to a desalting treatment and a re-dispersing treatment, thereby obtaining a metal particle dispersion liquid A. The detailed operation is as follows.

800 g of the metal particle-forming liquid prepared in the above-described manner was collected, and the pH thereof was adjusted to 9.2 ± 0.2 at 25°C using 1 mol/L of sulfuric acid.

A centrifugation operation was performed on the metal particle-forming liquid whose pH had been adjusted, using a centrifuge (himacCR22GIII, using R9A as an angle rotor, manufactured by Hitachi Koki Co., Ltd.) under conditions of 35°C at 9000 rpm for 60 minutes. Thereafter, 784 g of the supernatant liquid was disposed of, and 0.2 mmol/L of a NaOH aqueous solution was added to the remaining solid (a solid containing metal particles and gelatin) such that the total amount thereof was set to 40 g. Further, the solution was stirred by hand using a stirring rod, thereby obtaining a crude dispersion liquid X.

By performing this operation, 120 crude dispersion liquids X (4800 g in total) were prepared, and all of these crude dispersion liquids X were added to a tank made of SUS316L and mixed. Next, 10 mL of a 10 g/L solution (as the solvent, a mixed solution of methanol and ion exchange water at a volume ratio of 1:1 was used) containing Pluronic 31R1 (nonionic surfactant, manufactured by BASF SE) was further added to the tank.

Next, a batch type dispersing treatment was performed on the mixture of the crude dispersion liquids X in the tank at 9000 rpm for 120 minutes using an automixer 20 type (manufactured by PRIMIX Corporation) (a homomixer MARKII as a stirring unit). The liquid temperature during the dispersion treatment was maintained at 50°C.

After the dispersion treatment, the temperature of the solution was decreased to 25°C, and single pass filtration was performed using a Profile II filter (product type: MCY1001Y030H13, manufactured by Pall Corporation).

By performing the above-described operation, the desalting treatment and the re-dispersing treatment were performed on the metal particle-forming liquid to prepare a metal particle dispersion liquid A.

The prepared metal particle dispersion liquid A was accommodated in 20 L of a Union Container II type container and stored at 30°C.

In the metal particle dispersion liquid A, the content of the metal particles was 10% by mass with respect to the total mass of the metal particle dispersion liquid, and the content of gelatin was 1% by mass with respect to the total mass of the metal particle dispersion liquid.

Further, the results obtained by measuring the physical characteristics (the pH, the electrical conductivity, the viscosity) of the metal particle dispersion liquid A according to the same method as described above are shown below.
- pH (25°C) = 7.0
- Electrical conductivity = 0.08 mS/cm
- Viscosity (25°C) = 7.4 mPa·s

### [Shape of metal particles]

The shape of the metal particles contained in the dispersion liquid A was confirmed by adding the metal particle dispersion liquid A dropwise onto an electric carbon support film STEM100Cu (manufactured by Okenshoji Co., Ltd.), drying the liquid, and observing the film using a transmission electron microscope (TEM). The metal particles were tabular silver particles. The results are listed in Table 1.

### [Average equivalent circle diameter of metal particles]

TEM images obtained by observing the shape of the metal particles contained in the metal particle dispersion liquid A using a transmission electron microscope (TEM) were taken in image treatment software ImageJ (provided by National Institutes of Health (NIH)) to carry out an image treatment.

Specifically, image analysis was performed on 500 pieces of metal particles optionally extracted from the TEM images with several visual fields, and the diameters of equivalent circles having the same area were calculated. The average equivalent circle diameter of the metal particles was acquired by simply averaging (number average) the diameters of the equivalent circles having the same area of the obtained 500 pieces of metal particles. The results are listed in Table 1.

### [Average thickness of metal particles]

The metal particle dispersion liquid A was added dropwise onto a silicon substrate and dried to obtain a sample for observation. Using this sample for observation, the thicknesses of 500 pieces of metal particles contained in the metal particle dispersion liquid A were respectively measured according to a focused ion beam-transmission electron microscopy (FIB-TEM) method. The average thickness of the metal particles was acquired by simply averaging (number average) the thicknesses of 500 pieces of the metal particles. The results are listed in Table 1.

### [Average aspect ratio of metal particles]

The average aspect ratio of the metal particles was acquired by dividing the average equivalent circle diameter of the metal particles by the average thickness of the metal particles. The results are listed in Table 1.

### <Preparation of metal particle dispersion liquids B to E and G>

Metal particle dispersion liquids B to E (all tabular silver particles) containing tabular metal particles and a metal particle dispersion liquid G containing spherical metal particles were respectively prepared in the same manner as the preparation of the metal particle dispersion liquid A except that the amount of "0.10 g/L of a 13 L silver nitrate aqueous solution" to be added and the timing of addition of "1 N (mol/L) of a 5.0 L sodium hydroxide (NaOH) aqueous solution" in the "- preparation of metal particle-forming liquid" described above were changed.

Specifically, by reducing the amount of "0.10 g/L of a 13 L silver nitrate aqueous solution" to be added, the average equivalent circle diameter of the metal particles to be formed was increased, and the average aspect ratio was increased. Further, the timing of addition of "1 N (mol/L) of a 5.0 L sodium hydroxide (NaOH) aqueous solution" was advanced (for example, "1 N (mol/L) of a 5.0 L sodium hydroxide (NaOH) aqueous solution" was added before the change in pH of the liquid to which the silver sulfite white precipitate mixed solution had been added was stopped) so that the average aspect ratio was decreased to form a spherical shape.

In addition, the prepared metal particle dispersion liquids B to H were respectively measured and confirmed in the same manners as those for the metal particle dispersion liquid A. The results are listed in Table 1.

### <Preparation of metal particle dispersion liquid F>

As a metal particle dispersion liquid F, a gold nanoplate aqueous dispersion liquid Au-WPLC3-C (manufactured by Dai Nippon Toryo Co., Ltd.) containing tabular gold particles was prepared.

The metal particles contained in this aqueous dispersion liquid are tabular gold particles.

### [Examples 1 to 15 and Comparative Examples 1 to 10]

### <Preparation of inks 1 to 12>

Inks 1 to 12 with the following compositions were prepared using the metal particle dispersion liquids A to E respectively having an amount adjusted such that the content ratio of the metal particles reached 2% by mass. The dispersion liquids of the inks 1 to 12 in Table 1 indicate metal particle dispersion liquids A to E.

Further, the viscosity (30°C) of each ink measured according to the above-described method is as follows.

Ink 1: 5.0 mPa·s, ink 2: 5.0 mPa·s, ink 3: 5.0 mPa·s, ink 4: 5.0 mPa·s, ink 5: 5.0 mPa·s, ink 6: 7.0 mPa·s, ink 7: 8.5 mPa·s, ink 8: 9.5 mPa·s, ink 9: 11 mPa·s, ink 10: 4.0 mPa·s, ink 11: 4.5 mPa·s, and ink 12: 4.5 mPa·s

### <Composition>

- Metal particles (tabular silver particles) ··· 2% by mass
- First resin (anionic polymer) listed in Table 1 ··· amount listed in Table 1
- Second resin listed in Table 1 ··· amount listed in Table 1

Gelatin: a mixture of alkali-treated bovine bone gelatin having a weight-average molecular weight of 200000 and alkali-treated bovine bone gelatin having a weight-average molecular weight of 21000

Polyethyleneimine: Polyethyleneimine (manufactured by Polysciences, Inc.), linear (Mw: 25000), weight-average molecular weight: 25000
- Propylene glycol (organic solvent) ··· 30% by mass
- SURFLON (registered trademark) S-243 ··· 0.15% by mass
   (a fluorine-based surfactant 1 containing a perfluoro group, refractive index = 1.35, manufactured by AGC SEIMI CHEMICAL CO., LTD.)
- Ion exchange water ... remaining amount set such that the total amount of the composition was 100% by mass

The details of the first resin listed in Table 1 are described below.

Further, the pka is a value acquired by performing calculation on the monomer component of the first resin using ACD/Percepta (manufactured by Fujitsu Ltd.).

Sodium polystyrene sulfonate: poly(styrene sulfonic acid) sodium salt (manufactured by Alfa Aesar); a salt of an acid group as an anionic moiety is contained and a structural unit derived from sodium styrene sulfonate with a pka of -0.53 is included. The weight-average molecular weight (Mw) measured according to the above-described method is 300000.

Sodium polyacrylate: ARON AH-10 (manufactured by Toagosei Co., Ltd.); a salt (acrylic acid sodium salt) of an acid group as an anionic moiety is contained and a structural unit derived from sodium acrylate with a pka of 4.2 is included. The weight-average molecular weight (Mw) measured according to the above-described method is 200000.

### <Preparation of ink 13>

An ink 13 with the following composition was prepared using the metal particle dispersion liquid F having an amount adjusted such that the content ratio of the metal particles reached 2% by mass. The dispersion liquid of the ink 13 in Table 1 indicates the metal particle dispersion liquid F. The viscosity (25°C) thereof was measured according to the above-described method, and the value was 5.0 mPa·s.

### <Composition>

- Metal particles (tabular gold particles) ··· 2% by mass
   (Au-WPLC3-C, manufactured by Dai Nippon Toryo Co., Ltd.)
- Sodium polystyrene sulfonate ··· 0.2% by mass
   (anionic polymer serving as the first resin)
   Gelatin (second resin) ··· 0.2% by mass
   (a mixture of alkali-treated bovine bone gelatin having a weight-average molecular weight of 200000 and alkali-treated bovine bone gelatin having a weight-average molecular weight of 21000)
- Propylene glycol (organic solvent) ··· 30% by mass
- SURFLON (registered trademark) S-243 ··· 0.15% by mass
   (a fluorine-based surfactant 1 containing a perfluoro group, refractive index = 1.35, manufactured by AGC SEIMI CHEMICAL CO., LTD.)
- Ion exchange water ··· remaining amount set such that the total amount of the composition was 100% by mass

The shapes and the sizes (the shape, the average equivalent circle diameter, the average thickness, and the average aspect ratio) of the metal particles contained in the inks 1 to 13 were confirmed according to the same methods as those for the shapes and the sizes of the metal particles contained in the metal particle dispersion liquids, and the results were the same as the shapes and the sizes (the shapes and the sizes listed in Table 1) of the metal particles contained in the metal particle dispersion liquids.

### <Preparation of ink sets 1 and 2>

Ink sets 1 and 2 comprising the ink 4 and the following yellow ink or cyan ink were prepared.

### - Preparation of yellow ink -

A yellow ink was prepared in the same manner as in the preparation of the ink 1 except that the metal particles were replaced with C. I. Pigment Yellow 155 (manufactured by Clariant, INKJET YELLOW 4G VP2532) with the same amount as the amount of the metal particles in the preparation of the ink 1.

### - Preparation of cyan ink -

A cyan ink was prepared in the same manner as in the preparation of the ink 1 except that the metal particles were replaced with C. I. Pigment Blue 15 (manufactured by Tokyo Chemical Industry Co., Ltd.) with the same amount as the amount of the metal particles in the preparation of the ink 1.

### <Preparation of inks 21 to 30 for comparison>

Inks 21 to 30 with the following compositions were prepared using the metal particle dispersion liquids D and G respectively having an amount adjusted such that the content ratio of the metal particles reached 2% by mass.

Further, the viscosity (30°C) of each ink measured according to the above-described method is as follows.

Ink 21: 2.8 mPa·s, ink 22: 2.8 mPa·s, ink 23: 5.0 mPa·s, ink 24: 13 mPa·s, ink 25: 2.8 mPa·s, ink 26: 2.9 mPa·s, ink 27: 3.2 mPa·s, ink 28: 3.2 mPa·s, ink 29: 5.0 mPa·s, and ink 30: 5.2 mPa·s

### <Composition>

- Metal particles (spherical silver particles and tabular silver particles) ··· 2% by mass
- First resin listed in Table 1 ··· amount listed in Table 1
- Second resin listed in Table 1 ··· amount listed in Table 1
   (a mixture of alkali-treated bovine bone gelatin having a weight-average molecular weight of 200000 and alkali-treated bovine bone gelatin having a weight-average molecular weight of 21000)
- Propylene glycol (organic solvent) ··· 30% by mass
- SURFLON (registered trademark) S-243 ··· 0.15% by mass
   (a fluorine-based surfactant 1 containing a perfluoro group, refractive index = 1.35, manufactured by AGC SEIMI CHEMICAL CO., LTD.)
- Ion exchange water ··· remaining amount set such that the total amount of the composition was 100% by mass

The details of the components used in the comparative examples listed in Table 1 are shown below.
PEG: polyethylene glycol (manufactured by Wako Pure Chemical Industries, Ltd.)
PVP: polyvinylpyrrolidone (manufactured by Wako Pure Chemical Industries, Ltd.)

Further, the pka of PEG or PVP is a document value described in J. Am. Chem. Soc., 1960, 82 (4), pp. 795 to 798 or Serjeant EP, Dempsey B; Ionisation constants of organic acids in aqueous solution. IUPAC Chem Data Ser No.23. NY, NY: Pergamon pp. 989 (1979). Further, the pka of glycerin is a value acquired by performing calculation using ACD/Percepta (manufactured by Fujitsu Ltd.).

### <Image recording and evaluation>

### (1) Examples 1 to 11, 14, and 15 and Comparative Examples 1 to 10

A dedicated cartridge (Dimatix Materials Cartridge (Jetpowerd)) for an ink jet printer (DMP-2831, manufactured by FUJIFILM DIMATIX, Inc.) was sequentially filled with any of the above-described inks 1 to 13. The dedicated cartridge has a structure in which the ink cartridge and the ink jet head are integrated with each other, and the ink jet head has a nozzle with a nozzle diameter of 21.5 µm and a nozzle number of 16. Next, the dedicated cartridge filled with the ink was mounted on the ink jet printer.

A solid image (a length of 70 mm × a width of 30 mm) with specular gloss was recorded on a polyethylene terephthalate (PET) film by sequentially jetting the inks 1 to 13 from the nozzle of the dedicated cartridge on the PET serving as a base material at room temperature using the ink jet printer on which the dedicated cartridge was mounted. During the recording of the solid image, the dot density was set to 1200 dpi (dot per inch) and the amount of the ink to be jetted was set to 23 g/m².

### (2) Examples 12 and 13

A dedicated cartridge (Dimatix Materials Cartridge (Jetpowerd)) for an ink jet printer (DMP-2831, manufactured by FUJIFILM DIMATIX, Inc.) was filled with the ink 4 and a yellow ink or cyan ink using the ink set 1 or 2. The dedicated cartridge has a structure in which the ink cartridge and the ink jet head are integrated with each other, and the ink jet head has a nozzle with a nozzle diameter of 21.5 µm and a nozzle number of 16. Next, the dedicated cartridge filled with the ink was mounted on the ink jet printer.

A solid image (a length of 70 mm × a width of 30 mm) with specular gloss was recorded on a polyethylene terephthalate (PET) film by firstly jetting the ink 4 from the nozzle of the dedicated cartridge on the PET serving as a base material at room temperature using the ink jet printer on which the dedicated cartridge was mounted. The solid image was dried under a condition of allowing the solid image to stand at room temperature for 1 hour, and the yellow ink or cyan ink was jetted onto the solid image with specular gloss so as to be overpainted on the PET from the nozzle of the dedicated cartridge at room temperature so that a yellow solid image area or cyan solid image area was recorded. As the result, an image in which the solid image with specular gloss and the yellow or cyan solid image area were superimposed from the side of the PET film was recorded on the PET film.

Further, during the recording of the solid image with specular gloss and the yellow or cyan solid image area, the dot density was set to 1200 dpi and the amount of the ink to be jetted was set to 23 g/m² in both cases.

The following evaluations were performed on the solid images and the image recording performed in the above-described manner. The results are listed in Table 1.

### (Viscosity improving effect)

The viscosity of the ink before and after the addition of the first resin or a contrast component thereof was measured using AAKE MARS III (manufactured by Thermo Fisher Scientific Inc.), and the rate of increase in viscosity was acquired. The measurement was performed under conditions of a temperature of 30°C and a rotation speed of 200 rpm using a cone plate as the measurement geometry. Based on the rate of increase in viscosity, the evaluation was performed according to the following evaluation standards. In the following evaluation standards, "AA", "A", or "B" is in an acceptable level in practical use.

### <Evaluation standards>

AA: By adding the first resin or the contrast component thereof, the viscosity was increased by 75% or greater compared to the viscosity before the addition.
A: By adding the first resin or the contrast component thereof, the viscosity was increased by 50% or greater and less than 75% compared to the viscosity before the addition.
B: By adding the first resin or the contrast component thereof, the viscosity was increased by 25% or greater and less than 50% compared to the viscosity before the addition.
C: By adding the first resin or the contrast component thereof, the viscosity was increased by 10% or greater and less than 25% compared to the viscosity before the addition.
D: By adding the first resin or the contrast component thereof, the viscosity was increased only by less than 10% compared to the viscosity before the addition.

### (Jettability of ink)

At the time of jetting the inks 1 to 13 and 21 to 30 to record images, occurrence of separation of jetted ink droplets or liquid separation was visually observed, the state of ink jetting was imaged by a camera attached to an ink jet printer DMP-2831, and 100 ink droplets were observed to acquire the incidence rate of the separation or liquid separation. The evaluation was performed based on the following evaluation standards. In the following evaluation standards, "AA", "A", or "B" is in an acceptable level in practical use.

### <Evaluation standards>

AA: The incidence rate of separation of jetted ink droplets or liquid separation was less than 1%.
A: The incidence rate of separation of jetted ink droplets or liquid separation was 1% or greater and less than 5%.
B: The incidence rate of separation of jetted ink droplets or liquid separation was 5% or greater and less than 20%.
C: The incidence rate of separation of jetted ink droplets or liquid separation was 20% or greater and less than 50%.
D: The incidence rate of separation of jetted ink droplets or liquid separation was 50% or greater.

### (Drying speed)

A PET film to which each ink was jetted was allowed to stand at room temperature (25°C), the degree of drying was visually observed, the time (drying speed) until the ink was dried was confirmed, and the drying properties of the ink before and after the addition of the first resin or the contrast component thereof were evaluated based on the following evaluation standards.

### <Evaluation standards>

AA: The time for drying the ink after the addition of the first resin or the contrast component was shorter than the time for drying the ink before the addition.
A: The time for drying the ink after the addition of the first resin or the contrast component was not changed from the time for drying the ink before the addition.
B: The time for drying the ink after the addition of the first resin or the contrast component was increased by less than or equal to twice the time for drying the ink before the addition.
C: The ink after the addition of the first resin or the contrast component was not dried at room temperature.

### (Specular glossiness of image)

### - Evaluation based on 20° gloss value -

The 20° gloss value of the solid image with specular gloss was measured using a gloss watch (micro-TRI-gloss, manufactured by BYK-Chemie GmbH). Based on the measured values, the specular glossiness of the image was evaluated according to the following evaluation standards. As the 20° gloss value is increased, this means that the specular glossiness is excellent. In the following evaluation standards, "AA" indicates that the specular glossiness of the image is most excellent. Further, "AA", "A", or "B" is in an acceptable level in practical use.

### <Evaluation standards>

AA: The 20° gloss value was 800 or greater.
A: The 20° gloss value was 600 or greater and less than 800.
B: The 20° gloss value was 300 or greater and less than 600.
C: The 20° gloss value was less than 300.

### - Sensory evaluation -

The specular glossiness of the solid image was evaluated by visually observing the image based on the following evaluation standards. In the following evaluation standards, "AA" indicates that the specular glossiness of the image is most excellent.

### <Evaluation standards>

AA: The image had excellent specular glossiness, and the reflected image was able to be identified.
A: The image had specular glossiness, but the reflected object was not able to be identified.
B: The image had weak metallic tone gloss, but did not have specular glossiness, and an object was not reflected.
C: The image did not have gloss and was seen to be gray.

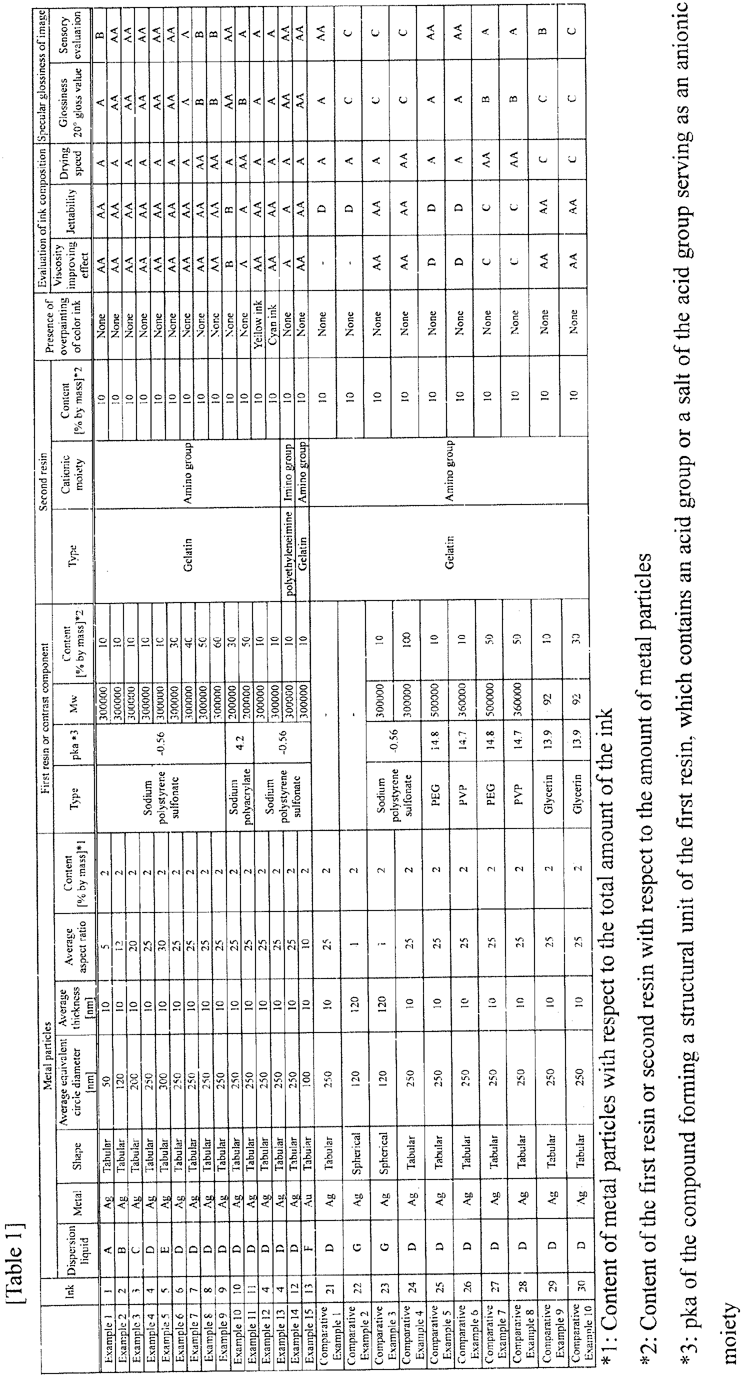

As listed in Table 1, in Examples 1 to 15 in which the inks 1 to 13 and the ink sets 1 and 2 were used, the specular glossiness of the image was excellent, the viscosity improving effects were high, and the jettability of the ink was excellent.

Based on the comparison results of the inks in Examples 1 to 5, the specular glossiness can be improved by containing tabular metal particles having an average aspect ratio of 10 or greater.

Further, as evident in the comparison results of the inks in Examples 4 and 6 to 9 and Comparative Example 4, the content of the anionic polymer (first resin) affects the specular glossiness, and thus it is preferable that the content of the anionic polymer (first resin) is not extremely high. Specifically, the content of the anionic polymer is preferably in a range of 5% by mass to 40% by mass and more preferably in a range of 10% by mass to 30% by mass with respect to the content of the metal particles.

Further, as shown in Examples 10, 11 and 14, results which were the same as or better than those in Example 1 and the like were obtained even in a case where the first resin with a different pka or the second resin with a different cationic moiety was used.

On the contrary, in Comparative Example 1 (ink 21) in which the anionic polymer (first resin) was not contained, the specular glossiness was obtained since the ink contained tabular metal particles, but the jettability of the ink was significantly degraded. Further, in Comparative Examples 2 and 3 (inks 22 and 23) in which metal particles having a spherical shape were contained, excellent specular glossiness was not obtained.

In Comparative Examples 5 to 8 (inks 25 to 28) in which a compound different from the anionic polymer (first resin) of the examples was contained, the specular glossiness was obtained, the viscosity improving effect was poor, and excellent jettability was unlikely to be maintained. Further, in Comparative Examples 9 and 10 (inks 29 and 30) in which glycerin different from the anionic polymer (first resin) of the examples was contained, the specular glossiness was not obtained, and the drying properties were degraded.

The entirety of the disclosure of JP2017-024426 filed on February 13, 2017 is incorporated in the present specification by reference.

All documents, patent applications, and technical standards described in the present specification are incorporated herein by reference to the same extent as in a case of being specifically and individually noted that individual documents, patent applications, and technical standards are incorporated by reference.

## Claims

1. An ink composition which is used for recording an image using an ink jet method, the ink composition comprising:
tabular metal particles having an average aspect ratio of 3 to 100;
a first resin having an anionic moiety;
a second resin having at least one cationic moiety selected from the group consisting of an amino group, an amido group, an imino group, a phosphonium group, a salt of an amino group, a salt of an amido group, a salt of an imino group, and a salt of a phosphonium group; and
water,
wherein a content of the first resin is in a range of 0.001% by mass to 60% by mass with respect to a total mass of the tabular metal particles.

2. The ink composition according to claim 1,
wherein the tabular metal particles have an average aspect ratio of 5 or greater.

3. The ink composition according to claim 1 or 2,
wherein the tabular metal particles have an average aspect ratio of 12 or greater.

4. The ink composition according to any one of claims 1 to 3,
wherein the tabular metal particles are particles of at least one metal selected from the group consisting of gold, silver, and platinum.

5. The ink composition according to any one of claims 1 to 4,
wherein the tabular metal particles are silver particles.

6. The ink composition according to any one of claims 1 to 5,
wherein the first resin contains an acid group or a salt of the acid group as the anionic moiety and has a structural unit derived from a compound having a pka of 5 or less.

7. The ink composition according to any one of claims 1 to 6,
wherein the first resin contains an acid group or a salt of an acid group as the anionic moiety and has a structural unit derived from a compound having a pka of 0 or less.

8. The ink composition according to any one of claims 1 to 7,
wherein the first resin contains at least one of a sulfonic acid group or a salt of a sulfonic acid group.

9. The ink composition according to any one of claims 1 to 8,
wherein the first resin contains sodium polystyrene sulfonate.

10. The ink composition according to any one of claims 1 to 9,
wherein the first resin has a weight-average molecular weight of 100000 to 500000.

11. The ink composition according to any one of claims 1 to 10,
wherein the content of the first resin is in a range of 1% by mass to 40% by mass with respect to the total mass of the tabular metal particles.

12. The ink composition according to any one of claims 1 to 11,
wherein the content of the first resin is in a range of 5% by mass to 30% by mass with respect to the total mass of the tabular metal particles.

13. The ink composition according to any one of claims 1 to 12,
wherein the second resin contains gelatin.

14. The ink composition according to any one of claims 1 to 13,
wherein a ratio of the content of the first resin to the content of the second resin is in a range of 0.5 to 4.

15. The ink composition according to any one of claims 1 to 14, which is used for recording a decorative image using the ink jet method.

16. An ink set comprising:
a first ink which is the ink composition according to any one of claims 1 to 15; and
a second ink which is different from the first ink and contains a colorant.

17. An image recording method comprising:
an ink applying step of applying the ink composition according to any one of claims 1 to 15 to a base material using an ink jet method.

18. An image recording method which is performed using the ink set according to claim 16, the image recording method comprising:
a first ink applying step of applying the first ink to a base material using an ink jet method; and
a second ink applying step of applying the second ink to the base material using the ink jet method.

19. A recorded material comprising:
a base material; and
an image which is disposed on the base material and contains tabular metal particles having an average aspect ratio of 3 to 100, a first resin having an anionic moiety, and a second resin having at least one cationic moiety selected from an amino group, an amido group, an imino group, a phosphonium group, a salt of an amino group, a salt of an amido group, a salt of an imino group, or a salt of a phosphonium group.

20. The recorded material according to claim 19, further comprising:
a colored image containing a colorant, which is provided at at least one of between the base material and the image, or on the image.
